# EUROPEAN PATENT SPECIFICATION

(11) **EP 1 846 631 B1**
(45) Date of publication and mention of the grant of the patent: **16.03.2011**
(21) Application number: 06700348.3
(22) Date of filing: 10.01.2006
(51) Int. Cl.: E04G 3/28, E04G 5/04

(54) **APPARATUS FOR USE IN THE CONSTRUCTION OF BUILDINGS**
VORRICHTUNG FÜR DEN EINSATZ BEIM BAU VON GEBÄUDEN
APPAREIL UTILISE DANS LA CONSTRUCTION D'EDIFICES

(30) Priority: 13.01.2005 GB 0500619
(43) Date of publication of application: 24.10.2007
(73) Proprietor: Severfield-Rowen PLC, North Yorkshire YO7 3JN (GB)
(72) Inventor: SEVERS, John L., Maughold, Isle of Man IM7 1AZ (GB); ELLISON, Peter, Kirkby Steven Cumbria CA17 4NY (GB)
(74) Representative: Adamson Jones
(86) International application number: PCT/GB2006/050007
(87) International publication number: WO 2006/075192

(56) References cited:
- EP-A- 0 350 313
- EP-A- 0 401 751
- EP-A- 1 466 862
- DE-A1- 2 348 067
- GB-A- 2 390 110
- US-A- 4 660 678

## Description

This invention relates to construction, and in particular to the construction of tall buildings, such as skyscrapers, using apparatus having means for moving construction workers and/or construction material relative to the structure.

Modern buildings, whether commercial, office or residential units, are often constructed by first forming a building framework on suitable foundations, and then forming the floors and walls of the building within and about the building framework. The building framework generally comprises a plurality of vertically orientated steel columns to which horizontally orientated steel beams or girders are attached to form a floor-supporting framework for each floor of the building.

Once the foundations have been formed and the vertical columns erected, the floor-supporting frameworks are constructed about, and fixed to, the vertical columns. Beams are raised to the level of a particular floor in a horizontal orientation and fixed by construction workers to appropriate vertical columns or other horizontal beams until the floor-supporting framework for that floor is completed. Once a floor-supporting framework has been constructed, a floor is formed about, or on, the supporting framework. For example, concrete is typically cast about each floor-supporting framework, thereby forming the floors of the building.

The horizontal beams are typically raised to their intended fixing site using a tower crane or the like. The construction workers who fix the horizontal beams to the building framework are conventionally raised to the fixing site using a Mobile Elevated Work Platform (MEWP) that is situated on the ground. However, a MEWP situated on the ground is only suitable for constructing the first few floors of a building due to its limited vertical and horizontal range, and is therefore unsuitable for the construction of tall buildings and for use at construction sites having limited space or unsuitable ground conditions. In this case, construction workers are either transported to the fixing site on a work platform carried by a crane, or a MEWP is lifted onto the highest completed floor by a crane and then used to transport construction workers to fixing sites within range of the MEWP.

The method of lifting a MEWP onto the highest completed floor using a crane, and then using the MEWP to transport construction workers to fixing sites within range of the MEWP, suffers from numerous disadvantages. Such disadvantages include the need to install floors before the building framework is completed in order to support the MEWP. In particular, the loading of a concrete floor should not occur until the concrete has cured to about 75% of its full loading capacity, which generally takes at least five days following installation, and concrete floors typically need at least twenty-eight days to cure fully. In addition, there is an increased risk of an accident occurring when a MEWP is supported on the floor of a partially constructed building rather than the ground. In particular, the drive system of a MEWP is generally not disabled at a construction site, and hence an inexperienced operator could drive the MEWP over the edge of the floor because guardrails are generally designed to prevent construction workers, rather than heavy machines, from falling over the edge.

The method of transporting construction personnel to the fixing site on a work platform carried by a crane also suffers from disadvantages, which include the increased risk of an accident occurring when construction workers are left, secured by a harness to the building framework, at the fixing site whilst the crane raises a beam to the fixing site.

Whatever method is used to bring the construction workers into position, it is commonly the case that the workers need to access open steelwork. This may involve straddling the steelwork, climbing ladders lashed to the steelwork and the workers securing themselves to the steelwork using lanyards and safety harnesses. Considerable hazards are involved in such operations.

In general, the inefficiency and/or inconvenience of conventional methods used in the erection of structural frameworks for buildings may increase the likelihood of non-compliance with safety regulations and proper working procedures, with an increased risk of harm to the construction personnel.

GB-A-2 390 110 discloses an apparatus for providing access to the framework of a building under construction comprising a base unit adapted to accommodate a construction worker and rest on the framework.

There has now been devised an improved apparatus which overcomes or substantially mitigates the above-mentioned and/or other disadvantages associated with the prior art.

According to a first aspect of the invention, there is provided an apparatus for use in construction, which apparatus comprises a base unit adapted to accommodate a construction worker and locatable on a structure in an elevated position relative to the ground, and a mechanism for moving a construction worker and/or construction material relative to the structure, characterised in that the base unit comprises a plurality of clamps, actuatable to releasably fix the base unit to the structure in the elevated position, wherein each clamp includes a location surface that is adapted to lie alongside an upper surface of a beam of the structure before actuation of the clamp.

According to a further aspect of the invention, there is provided a method of construction comprising the steps of
(a) providing apparatus as described above;
(b) raising the apparatus relative to a structure;
(c) positioning the apparatus such that the location surface of each clamp lies alongside an upper surface of a beam of the structure;
(d) actuating the clamps so as to releasably fix the apparatus to the structure in an elevated location relative to the ground; and
(e) moving a construction worker and/or construction material relative to the structure.

The apparatus and method according to the invention are advantageous principally because the apparatus is releasably fixed to a structure, in an elevated position relative to the ground, before being used to move a construction worker and/or construction material relative to the structure. The apparatus and method according to the invention are therefore safer than prior art apparatus and methods in which the apparatus is simply placed upon either the ground or a concrete floor of the structure, and then used to move construction workers and/or construction material relative to the structure. The risk of accidents occurring whilst moving construction workers and/or construction material relative to the structure is therefore significantly reduced by the present invention.

Most preferably, the base unit is adapted to accommodate a construction worker whilst the apparatus is raised relative to the structure. In particular, the base unit preferably satisfies recognised safety standards relating to transportation platforms for construction workers, which are commonly referred to in the UK as "man-riders". The base unit preferably comprises a floor and a peripheral barrier, most commonly in the form of a safety rail. The construction worker accommodated by the base unit is preferably attached to the safety rail by a safety harness during the raising of the apparatus relative to the structure.

The apparatus may be raised relative to the structure by a crane. The apparatus is then preferably fixed to the structure in an elevated location relative to the ground while the crane remains engaged with the apparatus. The crane then preferably disengages from the apparatus. In this case, the apparatus is preferably adapted to be coupled to a crane, by means of attachment lugs, for example.

Alternatively, the apparatus may include a mechanism for raising itself relative to the structure. For instance, the apparatus may include a raising mechanism that cooperates with horizontal and/or vertical beams of the structure to raise the apparatus relative to the structure. Most preferably, operation of the raising mechanism is controllable by a construction worker accommodated by the base unit. The raising mechanism may also be adapted for fixing the base unit to the structure in an elevated position relative to the ground.

The apparatus according to the invention preferably comprises a mechanism for moving a construction worker relative to the base unit and/or a mechanism for moving construction material relative to the base unit. The mechanism for moving construction material relative to the base unit may comprise a crane or a winch, for example.

The mechanism for moving a construction worker relative to the base unit preferably includes a work platform that is adapted for accommodating a construction worker, and a mechanism for moving the work platform relative to the base unit. In use, the work platform and construction worker are preferably elevated to a fixing site of greater elevation than the base unit relative to the ground, at which site the construction worker fixes construction material to the structure. Most preferably, construction material is transported to the construction worker at the fixing site by a crane.

In presently preferred embodiments, the apparatus according to the invention comprises a support body mounted on the base unit, and a boom extending between the support body and the work platform. Most preferably, the apparatus has the general form of a conventional Mobile Elevated Work Platform (MEWP) but including clamps for fixing the base unit to a structure such that the base unit is in an elevated position relative to the ground, said clamps preferably being movably mounted relative to the base unit. Therefore, unlike a conventional MEWP, the apparatus according to the invention does not require any ground drive or support system.

Preferably, the support body is rotatably mounted on the base unit. The boom is preferably pivotally mounted at one end to the support body, and at the other end to the work platform. The apparatus preferably includes a mechanism, such as a first hydraulic ram, for rotating the boom relative to the support body about a single horizontal axis. Similarly, the apparatus preferably includes a mechanism, such as a second hydraulic ram, for rotating the work platform relative to the boom about a single horizontal axis.

The apparatus preferably includes a self-levelling system that maintains the work platform in a generally horizontal orientation. Any suitable self-levelling system may be used. For instance, the self-levelling system may be controlled by a microprocessor, such that the system either continuously or intermittently senses the orientation of the work platform, and automatically maintains the work platform in a horizontal orientation during use.

Most preferably, the boom is telescopically extendible and retractable. In this case, the boom will generally comprise a plurality of tubular members that are slidably engaged with one another. Alternatively, however, the boom may be of fixed length.

In addition, the apparatus preferably includes a mechanism for rotating the work platform relative to the boom about at least one generally vertical axis. Most preferably, the apparatus includes at least one connecting member that couples the boom and the work platform together. The connecting member is preferably pivotally connected to the boom at one end, and pivotally connected to the work platform at the other end. Most preferably, the apparatus includes a mechanism for rotating the connecting member relative to the boom about a first vertical axis, and a mechanism for rotating the work platform relative to the connecting member about a second vertical axis, such that the work platform is moved within a generally horizontal plane relative to the boom. Such an arrangement allows the work platform to be manoeuvred around obstacles such as vertical beams.

The work platform may be adapted to accommodate one or more construction workers, and preferably comprises a floor and a peripheral safety rail. The hydraulic rams, the telescopic boom, and/or the rotatable support body that determine the position of the work platform relative to the base unit are preferably controllable by the construction worker accommodated by the work platform. Most preferably, a control panel is mounted to the work platform to enable the construction worker to move the work platform relative to the base unit, and hence control actuation of the hydraulic rams, the telescopic boom, and/or the rotatable support body that determine the position of the work platform relative to the base unit. The control panel on the base unit preferably includes a selector switch that must be in an appropriate state for the control panel on the work platform to function.

Preferably, one or more of said clamps, and most preferably all of said clamps, are movably mounted relative to the base unit. This enables the base unit to be fixed readily to a range of different structures.

Preferably, the apparatus according to the invention comprises three or more clamps for fixing the base unit at three or more points to the structure, the three or more clamps being movably mounted relative to the base unit. Most preferably, the apparatus according to the invention comprises four clamps for fixing the base unit at four points to the structure, the four clamps being movably mounted relative to the base unit.

The clamps of the apparatus are preferably adapted to engage one or more beams or the like of the structure. These beams will generally take the form of I-section beams that are conventionally formed from steel. However, the clamps may be adapted to engage different beam profiles, such as beams having circular, rectangular or hexagonal cross-sectional shapes. Most preferably, the clamps of the apparatus are adapted to engage a pair of horizontal beams that are orientated parallel to each other. However, the clamps may be adapted to engage other arrangements of beams, such as arrangements comprising non-parallel horizontal beams and/or vertical beams.

Each clamp is preferably attached to a leg that extends from the base unit. Each clamp is movable relative to the base unit, and such movement is preferably brought about by movement of the leg relative to the base unit. In particular, each leg is preferably movable relative to the base unit and/or adjustable in length such that the length of that part of the leg that projects beyond the base unit is alterable. Most preferably, the apparatus comprises four legs with an clamp attached to the distal end of each leg.

Each leg may be rotatably mounted to the base unit. In this case, each leg is preferably also telescopically extendible and retractable. In a presently preferred embodiment, however, each leg is slidably mounted within a housing that is fixed relative to the base unit, such that an clamp at one end of each leg may be extended and retracted relative to the base unit by movement of the leg relative to the housing. In this case, the apparatus preferably comprises four legs that are arranged parallel to one another.

Two or more of the clamps, and hence their associated legs, may be mechanically connected so as to facilitate co-ordinated movement of the clamps. Alternatively, coordinated movement of the legs and clamps may be achieved by means of a microprocessor and suitable sensors. In particular, since structures under construction generally include pairs of parallel beams, the apparatus is preferably arranged such that the clamps are always arranged along two parallel lines.

The operation of the clamps is preferably controllable by a construction worker accommodated by the base unit. In addition, the movement of the clamps relative to the base unit is preferably controllable by a construction worker accommodated by the base unit. In particular, the base unit preferably includes a control panel that enables a construction worker to control said operation and/or movement of the clamps, and hence also any legs supporting the clamps. The control panel preferably includes, or is in communication with, a suitable control device, such as a microprocessor. Most preferably, the control panel is connected to the microprocessor and/or the clamps such that the control panel is movable by the construction worker relative to the base unit. In particular, the control panel is preferably connected to the microprocessor and/or the clamps by means of a flexible cable or a wireless link.

Preferably, each clamp and leg is operated and/or moved using a hydraulic or electro-mechanical transmission system. The control panel is preferably only functional when the boom and work platform are in a configuration that is suitable for transportation of the apparatus. In addition, the control panel preferably includes a selector switch that must be in an appropriate state for the control panel to function.

Most preferably, each clamp comprises first and second clamp members that are movable relative to one another so as to captivate a beam or part of a beam between the clamp members on actuation of the clamp.

In presently preferred embodiments, each clamp is adapted for engagement with a flange of a beam comprising a pair of flanges joined by a connecting web. However, each clamp may also be able to engage beams having a range of different cross-sectional shapes, such as circular, rectangular or hexagonal cross-sections. In this case, the location surface is preferably adapted to lie against an outer face of the flange, and the clamp arms are preferably adapted to engage an inner face of the flange on each side of the connecting web, such that the flange is captivated, in use, between the location surface and the first and second clamp members.

The clamp preferably comprises a housing to which the first and second clamp members are preferably mounted. The location surface is preferably defined by the housing, but may be defined by a separate location member. In addition, the housing may define one of the first and second clamp members.

Most preferably, the clamp includes a depression within which the flange is received, in use, as the location surface is brought alongside the outer face of the flange. This depression may be defined by the housing alone, or together with one or both of the clamp members. Most preferably, the depression is defined substantially by the housing, and is tapered so as to aid location of the flange alongside the location surface.

One or both of the first and second clamp members may be rotatably mounted relative to the location surface, such that the clamp members may be brought into engagement with the inner face of the flange once the location surface has been located alongside the outer face of the flange. In presently preferred embodiments, however, the first clamp member is mounted for linear movement relative to the second clamp member, and also preferably relative to the housing and the location surface. Most preferably, the first clamp member is mounted for linear movement in the plane of the location surface. This linear movement is preferably actuated by a hydraulic ram or the like. This arrangement enables beams having a larger range of cross-sectional shapes and sizes to be engaged by the clamp.

In this case, the first clamp member and/or the second clamp member preferably has an operable face that is inclined relative to the operable face of the location surface, and hence the inner face of the flange, such that the operable face is able to engage a peripheral part of the inner face of the flange. Alternatively, the first clamp member and/or the second clamp member may be rotatable relative to the location surface so that the clamp member may be rotated into engagement with the inner face of the flange. This rotation may be effected by a suitable drive mechanism that is controlled by a user, but most preferably this rotation is effected by the flange impinging upon the clamp member during use. In presently preferred embodiments, the first clamp member has an inclined operable face, and the second clamp member is rotatable relative to the location surface, as described above.

Each clamp may be rotatable relative to the leg on which it is mounted. In particular, the orientation of each clamp relative to its corresponding leg may be determined by an appropriate drive mechanism and controllable from the control panel of the base unit. Alternatively, each clamp may be resiliently biased into a rest orientation, and rotated in use by engagement with the beam to which the clamp is to be fixed.

However, in presently preferred embodiments, each clamp is fixed to one end of a leg. In this case, the first clamp member is preferably mounted to a carriage, which is itself mounted within the leg and includes a mechanism for moving the carriage relative to the leg, such that the first clamp member may be moved along a linear path relative to the leg. In particular, the carriage is preferably slidably mounted within the leg.

Most preferably, the second clamp member has a fixed linear position relative to the leg. Hence, the first and second clamp members are preferably brought into engagement with the flange by extension of the leg until the second clamp member engages the flange, and retraction of the carriage until the first clamp member engages the flange. These movements may be effected together, or in sequence, as appropriate.

The apparatus is preferably provided with a transportation frame upon which the apparatus is able to be mounted so that the apparatus may be readily transported on a truck or the like. In particular, the transportation frame preferably comprises a pair of cross-members that are arranged so that apparatus according to the invention may be releasably fixed to the cross-members. For example, the cross-members may have the form of I-section beams.

Preferred embodiments of the invention will now be described in greater detail, by way of illustration only, with reference to the accompanying drawings, in which
Figure 1 is a perspective view of a first embodiment of apparatus according to the invention secured to a pair of parallel beams;
Figure 2 is a perspective view of the arrangement of Figure 1 with the apparatus in an extended configuration;
Figure 3 is a perspective view of a base unit that forms part of the first embodiment of apparatus according to the invention;
Figure 4 is an end view of a first beam, and a clamp unit forming part of the first embodiment of apparatus according to the invention;
Figure 5 is an end view of a second beam, and the clamp unit forming part of the first embodiment of apparatus according to the invention;
Figure 6 is an end view of a first beam, and a first alternative clamp unit for use with the first embodiment of apparatus according to the invention;
Figure 7 is a perspective view of a first beam, and a second alternative clamp unit for use with the first embodiment of apparatus according to the invention;
Figure 8 is a perspective view of a first beam, and a third alternative clamp unit for use with the first embodiment of apparatus according to the invention;
Figure 9 is a perspective view of an alternative, and presently preferred, base unit for use with the first embodiment of apparatus shown in Figures 1 and 2;
Figure 10 is a fragmentary perspective view of the base unit of Figure 9;
Figure 11 is a fragmentary side view of the base unit of Figure 9 and 10;
Figure 12 is a side view of a clamp of the base unit of Figures 9 to 11 in which the clamp is in an open configuration;
Figure 13 is a view similar to that of Figure 12 showing the clamp in a first stage of engagement with a beam;
Figure 14 is a view similar to that of Figure 13 showing the clamp in a second stage of engagement with a beam;
Figure 15 is a view similar to that of Figure 14 showing the clamp engaged with a beam;
Figure 16 is a perspective view of a second embodiment of apparatus according to the invention incorporating the base unit of Figure 9, in which the apparatus is in an extended configuration;
Figure 17 is a perspective view of the second embodiment in a retracted configuration;
Figure 18 is a plan view of a transportation frame for use with apparatus according to the invention; and
Figure 19 is a side view of the transportation frame.

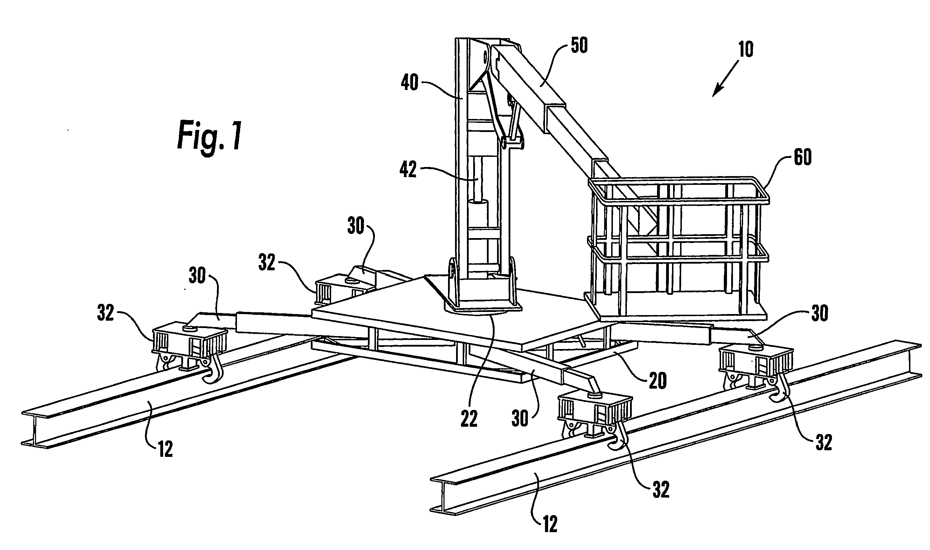

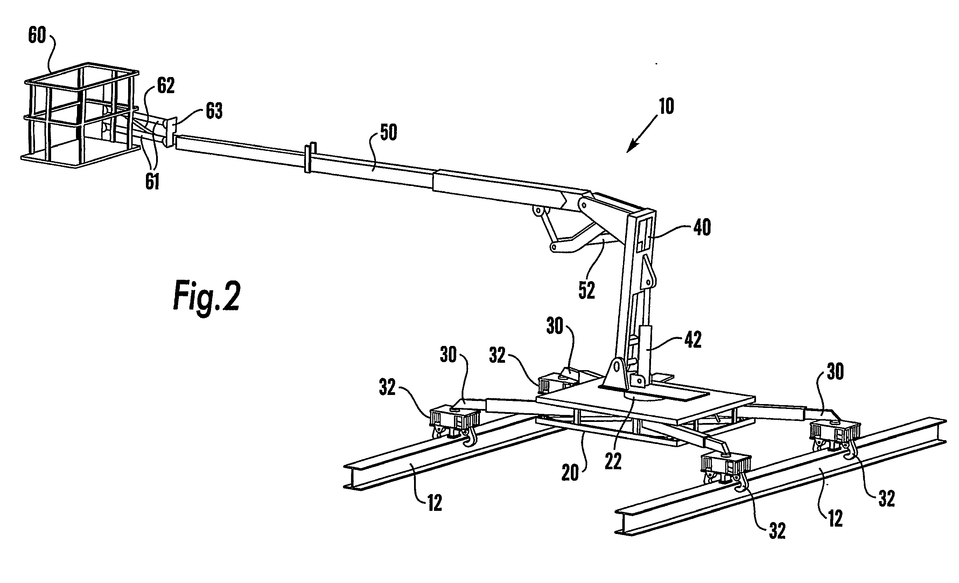

Figures 1 and 2 show a first embodiment of apparatus according to the invention, which is generally designated 10, fixed to a pair of parallel horizontal beams 12. The apparatus 10 comprises a base unit 20 having a central support plinth 22, four legs 30 extending from the base unit 10 with each leg 30 including a clamp unit 32 at its outer end, a support 40 rotatably mounted to the support plinth 22, a boom 50 extending from the support 40, and a work platform 60 for accommodating a construction worker at the outer end of the boom 50. The apparatus 10 according to the invention is formed in a suitably strong, durable and weather-resistant metal, such as steel.

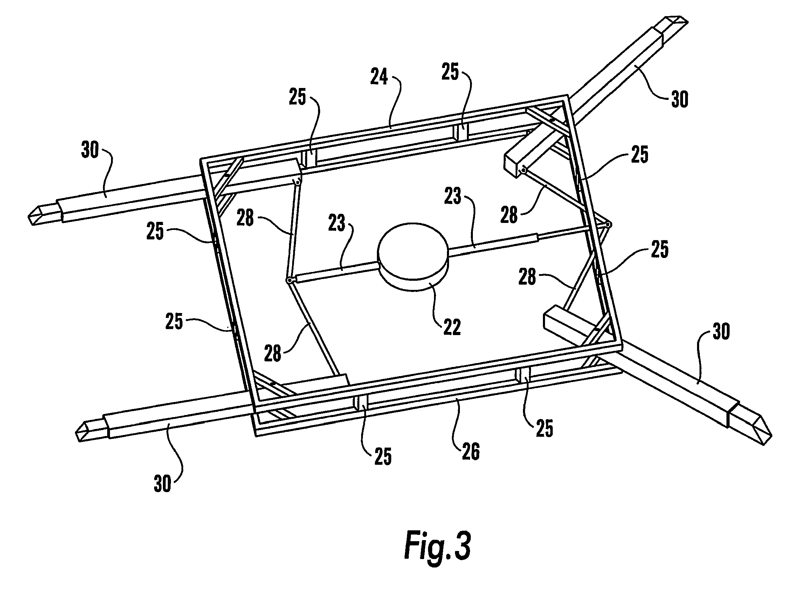

Referring now also to Figure 3, the base unit 20 comprises a framework of steel members. The framework of the base unit 20 includes an upper rectangular part 24 and a lower rectangular part 26 that are connected to each other by eight pillars 25. The pillars 25 are regularly spaced apart around the periphery of the base unit 20. The base unit 20 further includes a central support plinth 22, and a pair of diagonal cross-members (not shown in Figure 3) extending across each of the upper and lower rectangular parts 24,26 of the base unit 20.

Each leg 30 of the apparatus 10 is pivotally mounted, at a point that is near to its inner end, between the upper and lower rectangular parts 24,26 at a corner of the base unit 20. Each leg 30 is orientated in the plane in which the base unit 20 is orientated, and is capable of restricted rotation relative to the base unit 20 about an axis that is orientated perpendicularly to that plane. A pair of hydraulic rams 23 extend away from the central support plinth 22 towards opposite sides of the base unit 20. The outer end of each hydraulic ram 23 is pivotally attached to a pair of identical connecting arms 28. Each of these connecting arms 28 is pivotally attached to the inner end of an adjacent leg 30, as shown most clearly in Figure 3.

When one of the hydraulic rams 23 is in its fully retracted state, the pair of connecting arms 28 attached to that hydraulic ram 23 act to orientate the two legs 30 to which the connecting arms 30 are attached so that they are parallel to each other. When one of the hydraulic rams 23 is in its fully extended state, the pair of connecting arms 28 attached to that hydraulic ram 23 act to orientate the two legs 30 to which the connecting arms 30 are attached so that they are at an angle of approximately 90° to each other. In this way, each pair of connected legs 30 can be orientated relative to the base unit 30 according to the arrangement of the beams 12 or the like to which the base unit 20 is to be fixed.

Each leg 30 comprises an outer component which is pivotally mounted to the base unit 20, and an inner component which is slidably mounted within the outer component. The inner and outer components of each leg 30 are tubular in form, with a rectangular cross-section. A hydraulic ram (not visible in Figure 3) acts between the outer component and the inner component so that each leg 30 is telescopically extendible and retractable. A clamp unit 32 (not shown in Figure 3) is bolted to the lower surface of the inner component of the leg 30, at the outer end of the leg 30. In this way, each leg 30 can be extended or retracted, and hence each clamp unit 32 positioned relative to the base unit 30, according to the arrangement of the beams 12 or the like to which the base unit 20 is to be fixed.

The base unit 20 has a floor (which is transparent in Figures 1 and 2, and omitted from Figure 3, for clarity) that is supported at its periphery by the upper rectangular part 24 of the base unit 20, and along a pair of diagonal lines by the diagonal cross-members of the base unit 20. The floor of the base unit 20 is formed of expanded metal, and the central support plinth 22 extends a little distance above the floor.

The support 40 comprises a base plate that is rotatably mounted to the support plinth 22, and a rotation mechanism (not shown in the Figures) that causes the support 40 to rotate relative to the support plinth 22 and hence the base unit 20. The support 40 further comprises a generally upright support member that is hingedly mounted to the upper surface of the base plate, and a hydraulic ram that is hingedly mounted at one end to the upper surface of the base plate and at the other end to an upper part of the support member. The hydraulic ram of the support 40 acts to alter the inclination of the support member relative to the base unit 20 as desired.

A pair of parallel arms extend generally perpendicularly away from the upper end of the support member, and a proximal end of the boom 50 is hingedly mounted between these arms. A hydraulic ram 52, which is pivotally mounted at one end to an upper part of the support 40 and at the other end to a connecting arm that is itself pivotally connected to a part of the boom 50 adjacent to its proximal end, acts to rotate the boom 50 relative to the support 40 about a single horizontal axis. The limits of this rotation will depend upon the geometry of the support 40, the boom 50 and the hydraulic ram 52. In the embodiment shown in Figures 1 and 2, the boom 50 is rotatable up to approximately 70° above the horizontal plane and approximately 15° below the horizontal plane. However, it will be clear to the skilled person that greater degrees of rotation may be achieved by altering the geometry of the support 40, the boom 50 and the hydraulic ram 52. The boom 50 comprises three tubular components that are slidably engaged with one another, and the boom 50 is telescopically extendible and retractable.

A work platform 60 is connected to the distal end of the boom 50 by a pair of parallel connecting members 61 of equal length. The connecting members 61 are each pivotally attached at one end to a vertical wall of the work platform 60, and at the other end to a vertically-orientated link 63 at the distal end of the boom 50. The vertical wall of the work platform 60, the connecting members 61, and the link 63, are arranged so as to define a parallelogram, and the apparatus 10 further includes a hydraulic ram 62 that acts along a diagonal of that parallelogram so as to alter the shape thereof. Actuation of the hydraulic ram 62 therefore acts to raise or lower the work platform 60 relative to the link 63 and the boom 50.

The work platform 60 is maintained in a horizontal orientation, regardless of the orientation of the boom 50, by a self-levelling system. The self-levelling system comprises a microprocessor for controlling a hydraulic ram (not visible in the Figures) mounted inside the boom 50. The hydraulic ram within the boom 50 acts to alter the orientation of the link 63 relative to the boom 50. The self-levelling system either continuously or intermittently senses the orientation of the work platform 60 and/or link 63, during use, and when necessary activates the hydraulic ram within the boom so as to maintain the link 63 with a vertical orientation, and hence maintain the base of the work platform 60 with a horizontal orientation, at all times regardless of the orientation of the boom 50.

The apparatus 10 also includes a mechanism for rotating the link 63 about its longitudinal axis so that the connecting members 61 are rotated relative to the boom 50 about a vertical axis through an angle of up to 180°. The apparatus 10 further includes a mechanism for rotating the work platform 60 relative to the connecting members 61 about a vertical axis through an angle of up to 180°. These mechanisms enable the work platform 60 to move within a generally horizontal plane relative to the boom 50. In this way, the work platform 60 can be manoeuvred, in use, around obstacles such as vertical beams.

Rotation and inclination of the support member relative to the base unit, rotation of the boom 50 relative to the support member, and telescopic extension and retraction of the boom 50, are each controlled by the construction worker using a control panel (not shown in the Figures) mounted on the work platform 60.

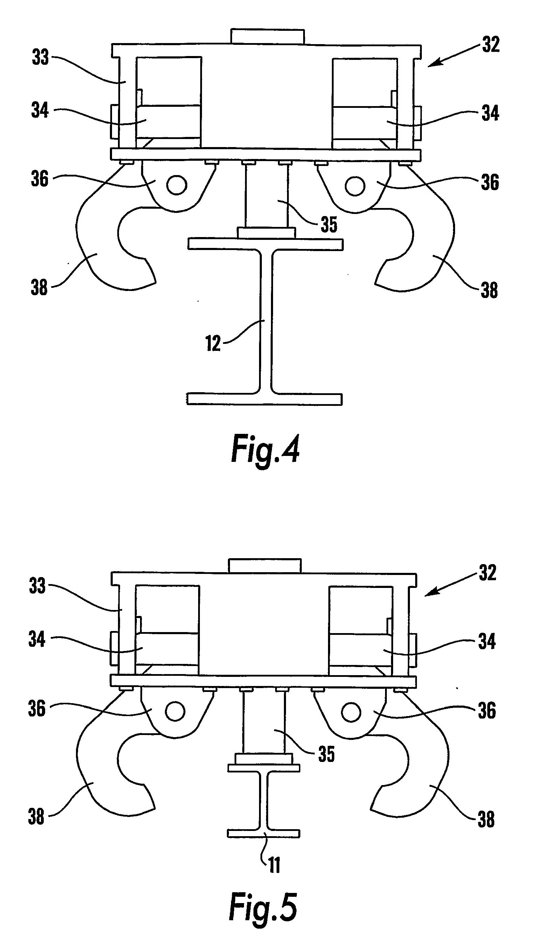

Figures 4 and 5 show the clamp unit 32 of the apparatus 10 described above positioned above a beam 11,12 before the clamp unit 32 has been actuated into engagement with the beam 11,12. The beam 12 shown in Figure 4, as well as in Figures 1, 2, 6, 7 and 8, is an I-section steel beam with a depth of 300mm. The beam 11 shown in Figure 5 is an I-section beam with a depth of 140mm. Each beam 11,12 comprises horizontally-orientated upper and lower flanges that are separated by a vertically-orientated connecting web.

The clamp unit 32 comprises a housing 33 that is bolted at its upper end to its associated leg 30 (not shown in Figures 4 and 5), a pair of hydraulic rams 34, a locating member 35, and a pair of clamp arms 38. The locating member 35 is a generally cylindrical body that extends downwardly from the lower surface of the housing 33 and has a flat lower surface.

The housing 33 includes two pairs of flanges 36 that extend downwardly from its lower surface. Each clamp arm 38 is pivotally mounted between a pair of flanges 36, at a point between its ends, so that the clamp arms 38 are able to rotate relative to the housing 33. Each hydraulic ram 34 is pivotally attached at one end to a wall of the housing 33, and at the other end to the upper end of the clamp arm 38 that is situated adjacent to the opposing wall of the housing 33. Extension and retraction of the hydraulic rams 34 causes the clamp arms 38 to rotate relative to the housing 33.

Before engagement, the hydraulic rams 34 are retracted until the clamp arms 38 are positioned such that the clamp unit 32 can be lowered until the locating member 35 contacts the upper surface of the beam 11,12. On actuation of the clamp unit 32, the hydraulic rams 34 are extended, thereby rotating the clamp arms 38, until the ends of the clamp arms 38 that are remote from the hydraulic rams 34 are brought into abutment with the lower surface of the upper flange of the beam 11,12. In this way, the clamp unit 32 captivates the flange of the beam 11,12 between the locating member 35 and the clamp arms 38, and hence fixes the apparatus 10 to the beam 11,12. The clamp arms 38 engage a central part of the upper flange of the beam 11,12, thereby enabling the clamp unit 32 to captivate a range of differently sized beams 11,12.

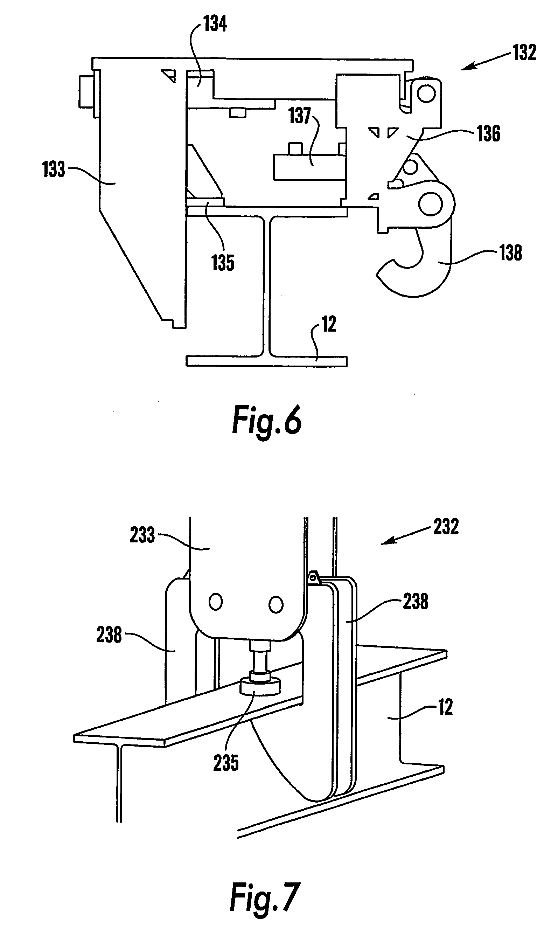

Figure 6 shows a first alternative clamp unit 132 for use with the apparatus 10 described above. The clamp unit 132 is shown in a pre-engagement position relative to a beam 12. The clamp unit 132 comprises a housing 133 that is bolted at its upper end to its associated leg 30 (not shown in Figure 6), a locating member 135, a carriage 136 that is acted on by a first hydraulic ram 134, and a clamp arm 138 that is acted on by a second hydraulic ram 137.

The housing 133 includes a vertical locating surface that is brought into abutment with one end of the upper flange of the beam 12, in use, and a locating member 135 that extends from the upper end of that surface and includes a horizontal lower surface that is brought into abutment with the upper surface of the beam 12, in use. The housing 133 further includes an upper member that extends above, and parallel with, the upper surface of the beam 12. The carriage 136 is slidably mounted to the upper member of the housing 133, and is acted upon by the first hydraulic ram 134 which is mounted within the housing 133.

The carriage 136 includes adjacent vertical and horizontal surfaces at its lower end that are brought into abutment with the other side of the upper flange of the beam 12, and the upper surface of the beam 12, respectively, as the first hydraulic ram 134 is retracted and hence the carriage 136 is moved towards the beam 12, in use. The clamp arm 138 is pivotally attached to the carriage 136 at a point near to the upper end of the arm 138, and the upper end of the arm 138 is pivotally attached to the second hydraulic ram 137 which is mounted within the carriage 136.

Before engagement, the first hydraulic ram 134 is extended, and the second hydraulic ram 137 is retracted, such that the clamp unit 132 can be positioned with the locating member 135 and the horizontal surface of the carriage 136 contacting the upper surface of the beam 12, and the vertical surface of the housing 133 contacting one end of the upper flange of the beam 12. On actuation, the first hydraulic ram 134 is retracted until the vertical surface of the carriage 136 is brought into abutment with the other end of the upper flange of the beam 12 to that engaged by the housing 133, and the second hydraulic ram 137 is then extended until the clamp arm 138 is brought into abutment with the lower surface of the upper flange of the beam 12. In this way, the clamp unit 132 captivates the upper flange of the beam 12 between the locating member 135, the carriage 136, and the clamp arm 138, and hence fixes the apparatus 10 to the beam 12.

Figure 7 shows a second alternative clamp unit 232 for use with the apparatus 10 described above. The clamp unit 232 is shown in engagement with a beam 12. The clamp unit 232 comprises a housing 233 that is bolted at its upper end to its associated leg 30 (not shown in Figure 7), a locating member 235 extending downwardly from the lower end of the housing 233, and a pair of clamp arms 238 that are acted on by a pair of hydraulic rams (not visible in Figure 7) within the housing 233.

Each clamp arm 238 is pivotally mounted at a point near to its upper end within the housing 233. Hydraulic rams act on the clamp arms 238 so as to cause rotation of the clamp arms 238 into, and out of, engagement with the beam 12. Each clamp arm 238 has a generally channel-shaped cross-section for increased strength.

Before engagement, the clamp arms 238 are positioned so that the clamp unit 232 can be lowered until the locating member 235 contacts the upper surface of the beam 12. On actuation, the clamp arms 238 are rotated relative to the housing 233 until they are brought into abutment with the lower surface of the upper flange of the beam 12. In this way, the clamp unit 12 captivates the upper flange of the beam 12 between the locating member 235 and the clamp arms 238, and hence fixes the apparatus 10 to the beam 12.

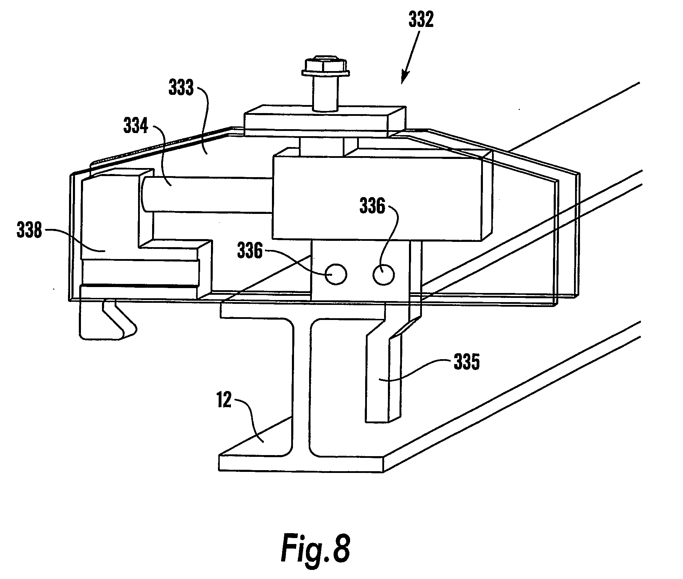

Finally, Figure 8 shows a third alternative clamp unit 332 for use with the apparatus 10 described above. The clamp unit 332 is shown in a pre-engagement position relative to a beam 12. The clamp unit 332 comprises a housing 333 that is bolted at its upper end to its associated leg 30 (not shown in Figures 4 and 5), a locating member 335, and a clamp arm 338 that is acted upon by a hydraulic ram 334.

The clamp arm 338 is slidably mounted within the housing 333, and projects downwardly therefrom. The portion of the clamp arm 338 that projects from the housing 333 is formed with an inwardly facing recess that is adapted to receive one end of the upper flange of the beam 12. The hydraulic ram 334 is mounted within the housing 333, and acts to slide the clamp arm 338 relative to the housing 333. The locating member 335 has an upper portion that is slidably mounted within a lower part of the housing 333 and has a lower surface adapted to be brought into abutment with the upper surface of the beam 12, and a projection that extends downwardly from the end of the upper portion that is remote from the clamp arm 338. The projection of the locating member 335 has a vertical surface that is adapted to be brought into abutment with the other end of the upper flange of the beam 12 to that which is to be received by the clamp arm 338.

Before engagement, the locating member 335 is positioned relative to the housing 333 such that the beam 12 will be centrally positioned relative to the clamp unit 332 when the horizontal and vertical surfaces of the locating member 335 are brought into contact with the upper surface of the beam 12, and one end of the upper flange of the beam 12, respectively. The locating member 335 is secured in this position by a pair of latching pins 336 that are fastened within opposing openings in the housing 333. Once the locating member 335 has been secured in this position, the horizontal and vertical surfaces of the locating member 335 are brought into contact with the upper surface of the beam 12, and one end of the upper flange of the beam 12, respectively. The clamp unit 332 is then actuated causing the first hydraulic ram 334 to be retracted until the recess of the clamp arm 338 receives the other end of the upper flange of the beam 12 to that engaged by the locating member 335. In this way, the clamp unit 332 captivates the upper flange of the beam 12 between the locating member 335 and the clamp arm 338, and hence fixes the apparatus 10 to the beam 12. The third alternative clamp unit 332 is therefore able to engage beams of different widths.

As discussed above, buildings are typically constructed by first forming a building framework on suitable foundations, and then forming the floors and walls of the building about the building framework. The building framework generally comprises a plurality of vertically orientated steel columns to which horizontally orientated steel beams are attached to form a floor-supporting framework for each floor of the building. The horizontally orientated steel beams of each completed floor-supporting framework typically have the form of a square or rectangular grid.

Before use, the legs 30 of the apparatus 10 are rotated, and either extended or retracted, until the clamp units 32,132,232,332 are appropriately positioned to engage with two parallel horizontal beams of a complete floor-supporting framework.

Whilst the apparatus 10 according to the invention is resting upon the ground, or on a transporting heavy goods vehicle, one or more construction workers enter the base unit 20 and secure themselves to the safety rail of the base unit 20 using safety harnesses.

The apparatus 10 is then lifted using a tower crane or the like and suspended above two parallel horizontal beams of a complete floor-supporting framework. The legs 30 of the apparatus 10 are rotated, and either extended or retracted, until the clamp units 32,132,232,332 are appropriately positioned to engage with the two parallel horizontal beams. The apparatus 10 is then lowered until the upper surface of each beam supports a pair of clamp units 32,132,232,332, and the clamp units 32,132,232,332 are actuated so as to secure the apparatus 10 to the floor-supporting framework.

Alternatively, the clamp unit 332 shown in Figure 8 may be rotatably mounted to its corresponding leg, and biased by an appropriate spring mechanism (not shown in Figure 8) into a rest position in which the housing 333 is orientated generally parallel to the leg. In this case, the apparatus 10 is lifted using a tower crane or the like and suspended between two parallel horizontal beams of a complete floor-supporting framework. In this position, the lower end of the clamp arm 338 of each clamp unit 332 is in a raised location relative to the upper surface of the corresponding beam, and the lower end of the locating member 335 of each clamp unit 332 is in a lowered location relative to the upper surface of the corresponding beam.

The legs 30 of the apparatus 10 are extended and then rotated until the locating members 335 of the clamp units 332 contact the beams. Further rotation of the legs 30 will cause each clamp unit 332 to rotate relative to its associated beam until the clamp arm 338 is situated on the opposite side of the beam to the locating member 335. The apparatus 10 is then lowered until the clamp units 332 are supported by the upper surface of the beams, and the clamp units 332 are actuated so as to secure the apparatus 10 to the floor-supporting framework.

In either case, the one or more construction workers may then enter the work platform 60, and transport themselves to a fixing site using the control panel mounted on the work platform 60. A tower crane or the like transports construction material to the fixing site so that the construction workers, whilst safely accommodated within the work platform 60, can fix the construction material to the structure. As the apparatus 10 is fixed to the structure before being used to transport construction workers to the fixing site, the risk of accidents occurring while the apparatus 10 is supported by the partially constructed structure is reduced.

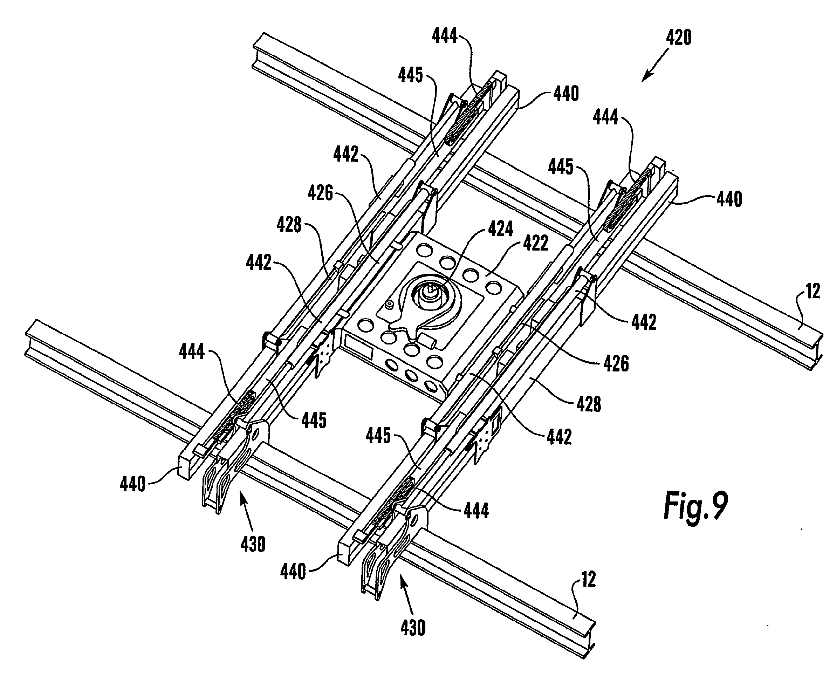

Figure 9 shows an alternative, and presently preferred, base unit 420 for use with the apparatus of Figures 1 and 2. In particular, the base unit 420 is shown engaged with a pair of parallel beams 12.

The base unit 420 comprises a central housing 422 upon which the support 40, boom 50 and work platform 60 of the apparatus shown in Figures 1 and 2 are mounted. However, the support 40 for use with this base unit 440 includes a platform with safety rail (not shown in the Figures) for accommodating a construction worker. The support 40 and associated platform are rotatably mounted to the central housing 422, and a suitable drive mechanism (not shown in the Figures) is provided for rotating the support 40 and platform relative to the base unit 420 during use. In this embodiment, the drive mechanism comprises a ring gear that is mounted to the base unit 420 and cooperates via a bearing system with a worm or gearbox drive that is mounted to the support 40 and associated platform. In addition, connection apparatus 424 for guiding oil and electrical circuits between the support 40 and the central housing 422 is also provided.

The central housing 422 includes a pair of parallel side walls to each of which is fixed an inner leg housing 426. The inner leg housings 426 are each generally box-section members that extend parallel to the side walls of the housing 422 to which they are fixed, and extend a little beyond the length of the side walls at each end. Furthermore, identical outer leg housings 428 are mounted adjacent and parallel to the inner leg housings 426.

A leg 440 is mounted within each of the inner and outer leg housings 426,428, such that the base unit 420 comprises four legs 440, two on each side of the central housing 422. Each leg 440 is defined by two channel-section members that are fixed to one another such that the leg 440 is of box-section construction. Each leg 440 is slidably mounted within its associated leg housing 426,428 so as to be movable relative to the leg housing 426,428 along its longitudinal axis. The four legs 440 are therefore at all times parallel to one another during use.

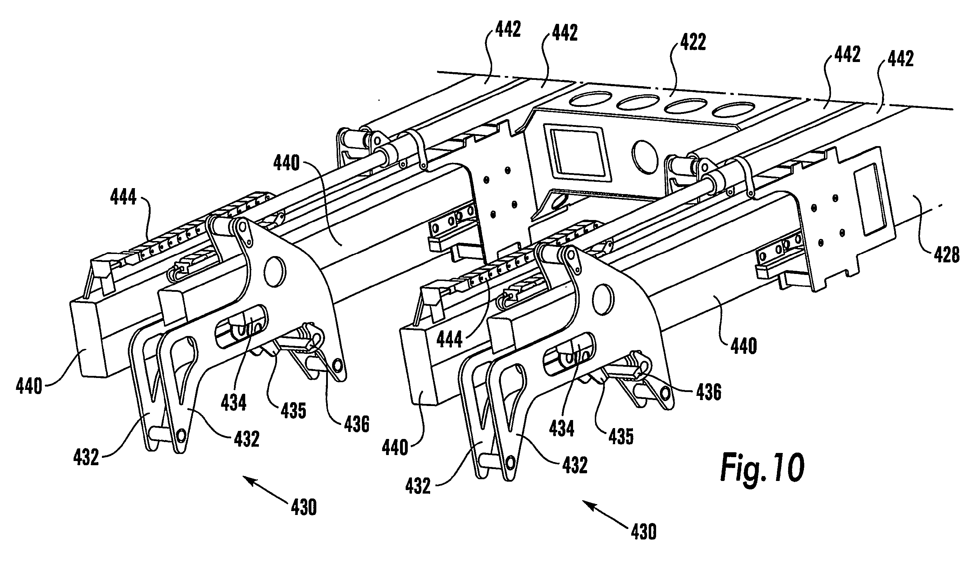

A clamp 430, which is described in more detail below with reference to Figures 10 to 15, is formed at an end of each of the four legs 440, such that the base unit 420 has front and rear ends that each have a pair of clamps 430 (the clamps 430 at the far end of the base unit 420 are hidden) with a predetermined and constant separation.

Each leg 440 is also provided with an external hydraulic ram 442 that actuates movement of the leg 440 relative to the associated leg housing 446,448. In particular, each external hydraulic ram 442 extends along the upper surface of that leg housing 446,448, and is fixed at one end to an end of a leg housing 446,448, and at its other end to the clamp 430 at the end of the associated leg 440.

A hose- and cable-carrying tray 444 is provided for each leg 440, at the opposite end of the leg 440 from the clamp 430. Each tray 444 extends between the leg 440 and a platform 445 that is fixed to an end of the leg housings 446,448. Hydraulic hoses and cables for the mechanisms and associated sensors of a particular leg 440 extend along the platform 445 and through the tray 444 to that leg 440.

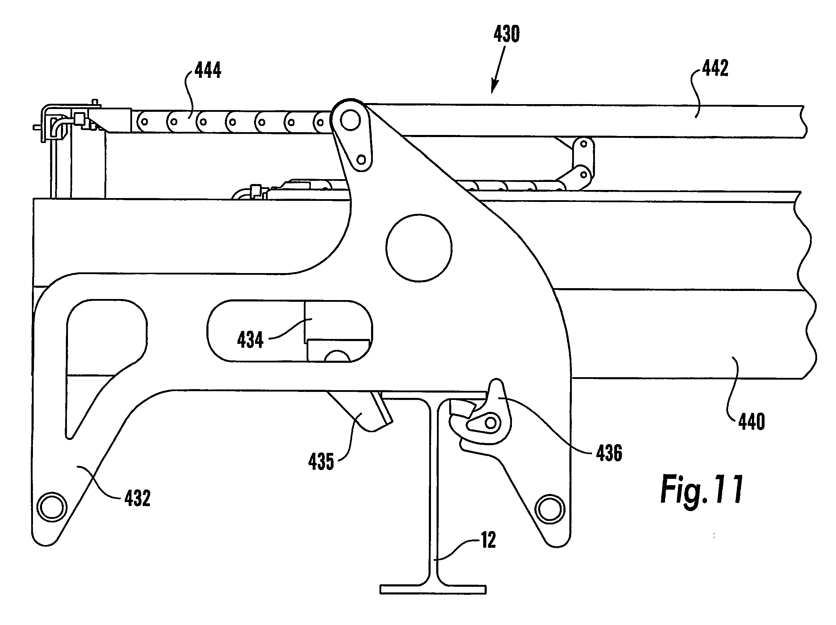

Turning now also to Figures 10 and 11, the clamp 430 comprises a pair of mounting plates 432, an inner clamp member 436 and an outer clamp member 435. The mounting plates 432 are fixed to either side of an end portion of the leg 440, and each comprise a pair of lower projections that together define a generally trapezoidal depression for receiving at least a flange of the beam 12 during use. The surfaces of the mounting plates 432 that define this depression include a surface that is orientated parallel to the associated leg 440. This surface defines a location surface of the clamp 430 that is adapted to lie alongside the upper surface (as viewed in Figure 11) of the beam 12 during use.

The mounting plates 432 also include an upper projection to which is mounted an end of the external hydraulic ram 442. In this way, actuation of the external hydraulic ram 442 effects movement of the leg 440 and mounting plates 432 relative to housings 422,426,428 of the base unit 420.

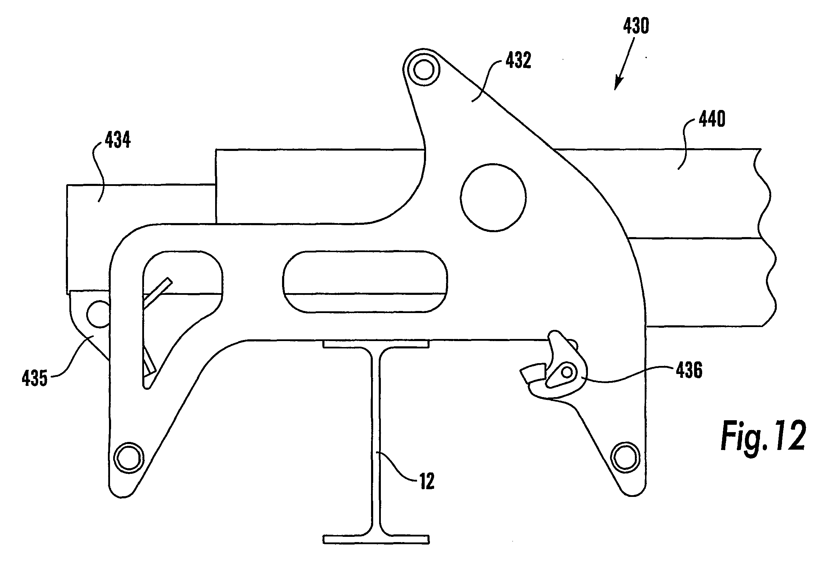

The inner clamp member 436 comprises four mounting arms, two of which are rotatably mounted either side of one mounting plate 432 and two of which are rotatably mounted either side of the adjacent mounting plate 432. The mounting arms are identical to one another in shape, and are arranged in registration with one another. Furthermore, each mounting arm is generally arcuate in form so as to define a concave surface that faces the outer clamp member 435 and is situated adjacent to the location surface of the clamp 430. The portion of the concave surface that is immediately adjacent to the location surface of the clamp 430 is adapted for engagement by the flange of the beam 12, as discussed in more detail below with reference to Figures 12 to 15. The inner clamp member 436 further includes an engagement bar that is mounted to the other end of the concave surface, the engagement bar being adapted to engage the underside of the flange of the beam 12.

The outer clamp member 435 is mounted for linear movement relative to the mounting plates 432 and the inner clamp member 436 in a direction that is parallel to the associated leg 440. In particular, the outer clamp member 435 is mounted to an end of a carriage 434 that is slidably mounted within the leg 440. The carriage 434 has the form of a box-section member, and is aligned along a generally central longitudinal axis of the leg 440. An inner hydraulic ram is mounted within the interior of the leg 440, and acts to effect movement of the carriage 434, and hence the outer clamp member 435, relative to the remainder of the clamp 430.

The outer clamp member 435 comprises an engagement surface that is inclined relative to the location surface of the clamp 430 so as to define an recess therebetween. Furthermore, this recess faces the inner clamp member 436. As shown most clearly in Figure 10, the upper channel-section member of each leg 440 extends a greater distance than the lower channel-section member, such that the outer clamp member 435 projects from the underside of the leg 440 into the depression defined by the mounting plates 432, and the outer clamp member 435 is able to move along almost the entire extent of the location surface of the clamp 430.

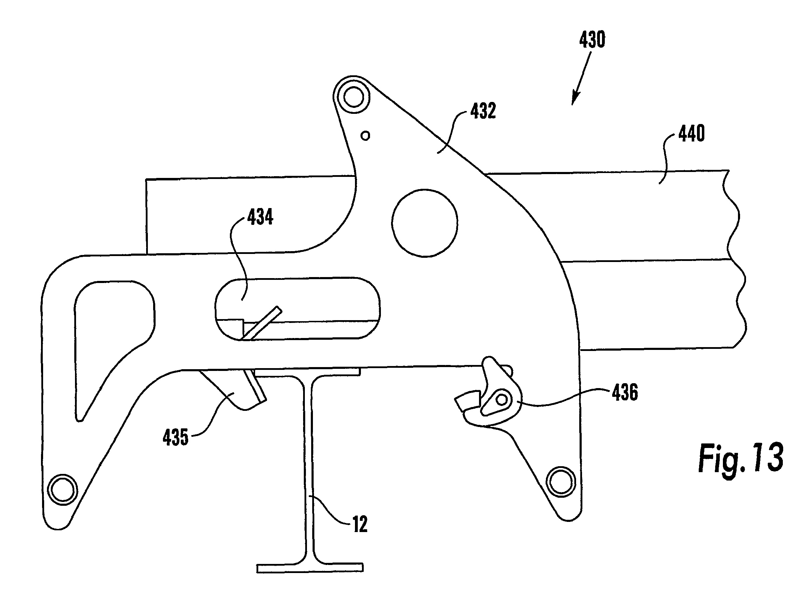

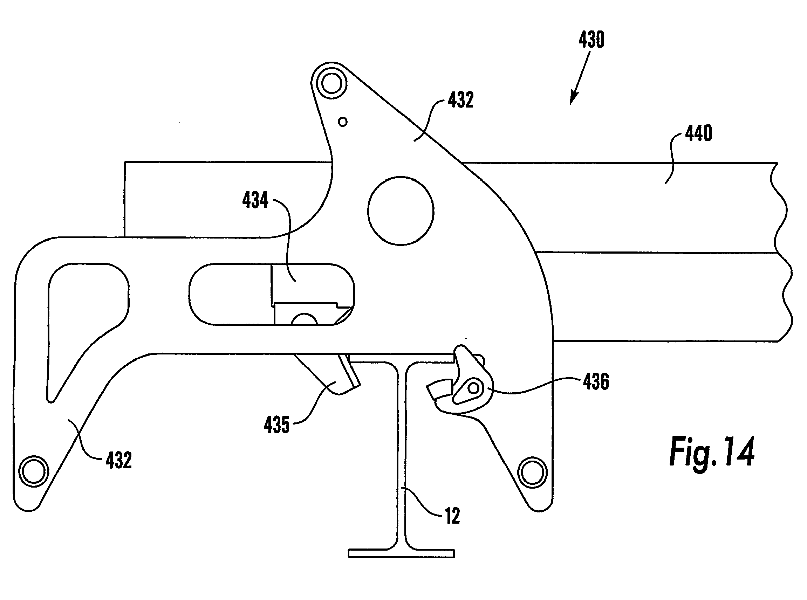

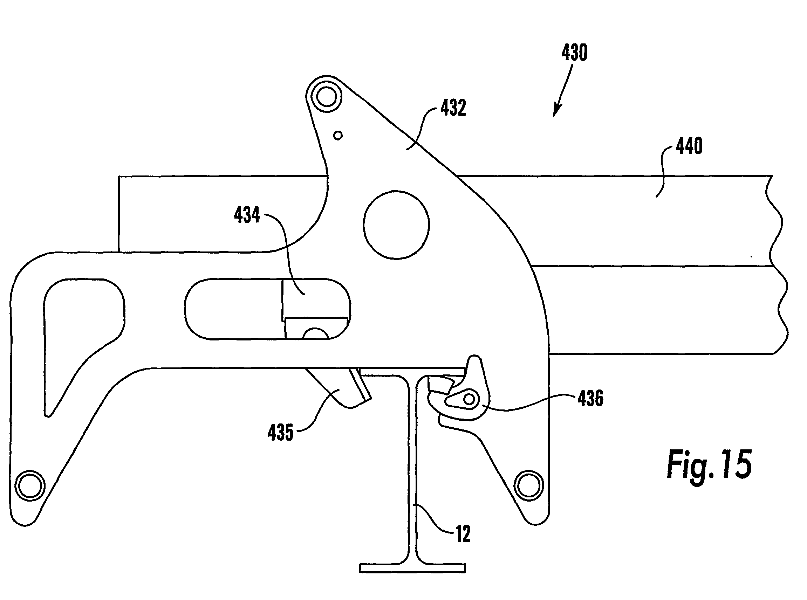

Figure 12 to 15 illustrate engagement of the clamp 430 with an I-section beam 12. In Figure 12, the carriage 434 is fully extended from the leg 440 so that the outer clamp member 435 does not extend into the depression defined by the mounting plates 432. In use, the clamp 430 is lowered until the location surface rests upon the upper surface of the beam 12, as shown in Figure 12. The carriage 434 is then retracted until the engagement surface of the outer clamp member 435 engages a peripheral part of the underside of the flange of the beam 12, as shown in Figure 13. The leg 440 is then extended, whilst at the same time retracting the carriage 434 so that the outer clamp member 435 remains engaged with the beam 12, until the flange of the beam 12 engages the portion of the concave surface of the inner clamp member 436 that is immediately adjacent to the location surface, as shown in Figure 14, and causes the inner clamp member 436 to rotate until the engagement bar of the inner clamp member 436 engages the underside of the flange, as shown in Figure 15.

In use, apparatus including the base unit 420 of Figure 9 is lifted using a tower crane or the like and suspended above two parallel horizontal beams 12 of a complete floor-supporting framework. The apparatus is suspended from the support 40 and associated platform, such that the base unit 420 of the apparatus may be rotated relative to the beams 12. The base unit 420 is rotated until the legs 440 are orientated perpendicularly to the two parallel beams 12. The legs 440 are then extended or retracted until the clamps 430 are appropriately positioned to engage with the two parallel horizontal beams 12. The apparatus is then lowered until the location surface of the each clamp 430 lies alongside the upper surface of each beam 12. The clamps 430 are then actuated, as described above, so as to secure the apparatus to the floor-supporting framework.

One or more construction workers may then enter the work platform 60, and transport themselves to a fixing site using the control panel mounted on the work platform 60. A tower crane or the like transports construction material to the fixing site so that the construction workers, whilst safely accommodated within the work platform 60, can fix the construction material to the structure. Since the apparatus is fixed to the structure before being used to transport construction workers to the fixing site, the risk of accidents occurring while the apparatus is supported by the partially constructed structure is reduced.

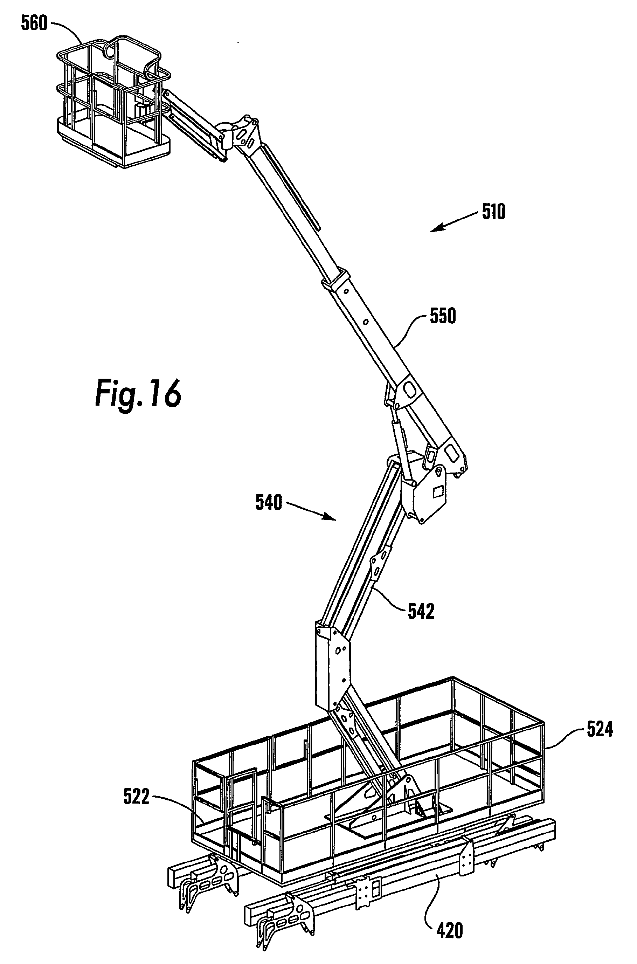

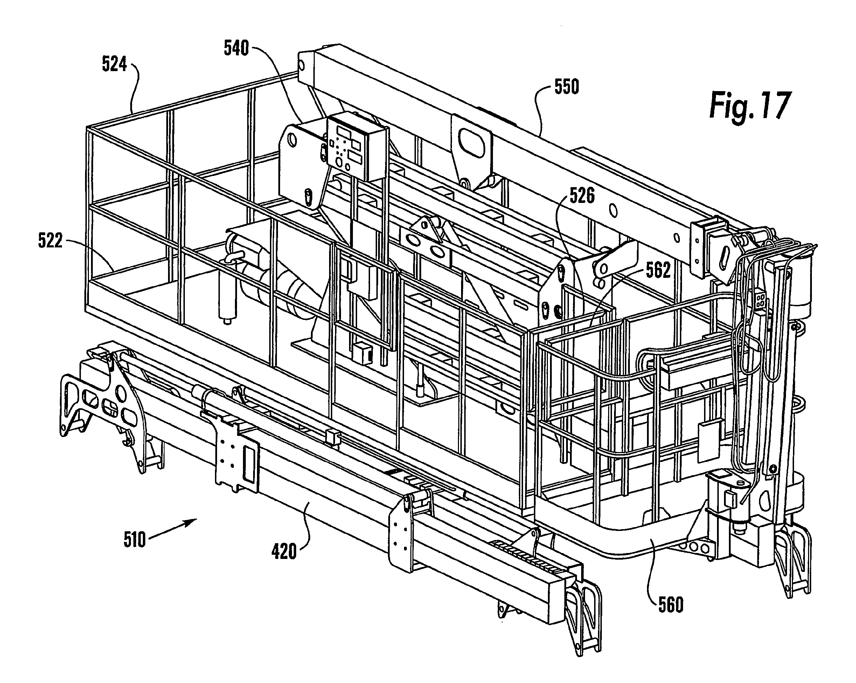

Figures 16 and 17 show a second embodiment of apparatus according to the invention, which is generally designated 510. The second embodiment 510 incorporates the base unit 420 shown in Figure 9. In Figures 16 and 17, the platform 520 and safety rail 524 of the base unit 420, which accommodate one or more construction workers during use, are clearly shown.

The boom 550 and work platform 560 of the apparatus 510 are essentially the same as the boom 50 and work platform 60 of the first embodiment 10. However, the support 540 of the second embodiment 510 differs in that it is extendible along a generally vertical axis during use by means of an additional linkage 542 and an additional hydraulic ram (not visible in the Figures). This support 540 enables the apparatus 510 to elevate the work platform 540 to greater heights, without increasing the length of the boom 550.

When the support 540 and boom 550 are fully retracted, as shown in Figure 17, the work platform 560 is positioned adjacent to one end of the platform 522 of the base unit 420. In particular, a gate 526 is provided in the safety rail 524 of the base unit 420, and a gate 562 is provided in the safety rail of the work platform 560, so that a construction worker is able to safely move from the base unit 420 to the work platform 560 during use.

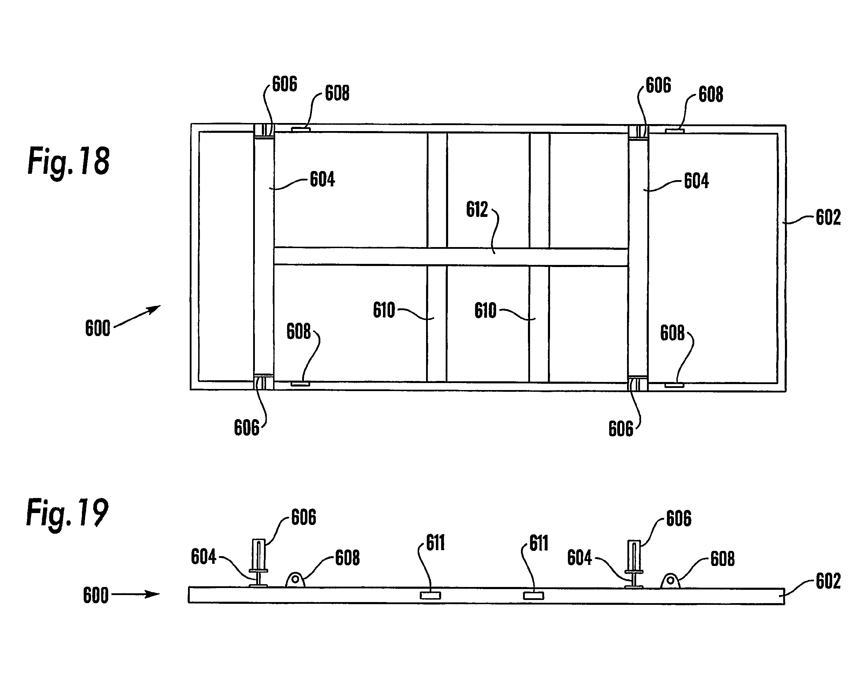

Finally, Figures 18 and 19 show a transportation frame for the apparatus 10,510 according to the invention, which is generally designated 600. The transportation frame 600 comprises a rectangular frame 602 of box-section members, and two I-section cross-members 604 that are welded to the upper surface of the rectangular frame 602. In particular, the two cross-members 604 extend across the width of the rectangular frame 602, and an upright location member 606 is formed at each end of the cross-members 604. The transportation frame 600 also includes four lugs 608, each including an aperture, to enable attachment of the transportation frame 600 to a crane.

The cross-members 604 are arranged so that apparatus 10,510 according to the invention may be mounted upon the cross-members 604. In this configuration, the transportation frame 600 and the apparatus 10,510 according to the invention may be raised by a crane or the like onto a truck, for example, for transportation. The cross-members 604 are also arranged so that the centre of gravity of the transportation frame 600 and the apparatus 10,510 according to the invention is located generally centrally relative to the crane attachment lugs 608.

Finally, two parallel receiving members 610 of box-section extend across the width of the rectangular frame 602 between openings 611 formed in the side walls of the rectangular frame 602. The receiving members 610 and openings 611 are adapted to receive the forks of a forklift truck or the like so that the transportation frame 600, including the apparatus 10,510 according to the invention, may be lifted onto a transportation truck, for example. A strengthening member 612 is fixed to the cross-members 604 and the receiving members 612, and extends along the longitudinal axis of the transportation frame 600, so as to give the transportation frame 600 greater strength and stability during use.

## Claims

1. Apparatus (10,510) for use in construction, which apparatus (10,510) comprises a base unit (20,420) adapted to accommodate a construction worker and locatable on a structure in an elevated position relative to the ground, and a mechanism for moving a construction worker and/or construction material relative to the structure, **characterised in that** the base unit (20,420) comprises a plurality of clamps (32,132,232,332,430) actuatable to releasably fix the base unit (20,420) to the structure in the elevated position, wherein each clamp (32,132,232,332,430) includes a location surface that is adapted to lie alongside an upper surface of a beam (11,12) of the structure before actuation of the clamp (32,132,232,332,430).

2. Apparatus (10,510) as claimed in Claim 1, wherein the base unit (20,420) is adapted to accommodate a construction worker whilst the apparatus (10,510) is raised relative to the structure.

3. Apparatus (10,510) as claimed in Claim 2, wherein the base unit (20,420) satisfies recognised safety standards relating to transportation platforms for construction workers.

4. Apparatus (10,510) as claimed in any one of Claims 1 to 3, wherein the base unit (20,420) comprises a floor and a peripheral barrier.

5. Apparatus (10,510) as claimed in any preceding claim, wherein the apparatus (10,510) is adapted to be coupled to a crane.

6. Apparatus (10,510) as claimed in any preceding claim, wherein the apparatus (10,510) comprises a mechanism for moving a construction worker relative to the base unit (20,420).

7. Apparatus (10,510) as claimed in Claim 6, wherein the mechanism for moving a construction worker relative to the base unit (20,420) includes a work platform (60,560) that is adapted for accommodating a construction worker, and a mechanism for moving the work platform (60,560) relative to the base unit (20,420).

8. Apparatus (10,510) as claimed in Claim 7, wherein the position of the work platform (60,560) relative to the base unit (20,420) is controllable by the construction worker accommodated by the work platform (60,560).

9. Apparatus (10,510) as claimed in Claim 8, wherein a control panel is mounted to the work platform (60,560) to enable the construction worker to move the work platform (60,560) relative to the base unit (20,420).

10. Apparatus (10,510) as claimed in Claim 9, wherein the control panel on the base unit (20,420) includes a selector switch that must be in an appropriate state for the control panel on the work platform (60,560) to function.

11. Apparatus (10,510) as claimed in any preceding claim, wherein one or more of the clamps (32,132,232,332,430) are movably mounted relative to the base unit (20,420).

12. Apparatus (10,510) as claimed in Claim 11, wherein the clamps (32,132,232,332,430) are adapted to engage one or more beams (11,12) or the like of the structure.

13. Apparatus (10,510) as claimed in Claim 11 or Claim 12, wherein each clamp (32,132,232,332,430) is attached to a leg (30,440) that extends from the base unit (20,420).

14. Apparatus (10,510) as claimed in Claim 13, wherein each clamp (32,132,232,332,430) is movable relative to the base unit (20,420), and such movement is brought about by movement of the leg (30,440) relative to the base unit (20,420).

15. Apparatus (10,510) as claimed in Claim 14, wherein each leg (30,440) is movable relative to the base unit (20,420) and/or adjustable in length such that the length of that part of the leg (30,440) that projects beyond the base unit (20,420) is alterable.

16. Apparatus (10,510) as claimed in Claim 15, wherein each leg (30,440) is rotatably mounted to the base unit (20,420).

17. Apparatus (10,510) as claimed in Claim 16, wherein each leg (30,440) is telescopically extendible and retractable.

18. Apparatus (10,510) as claimed in Claim 17, wherein each leg (30,440) is slidably mounted within a housing (426,428) that is fixed relative to the base unit (20,420), such that clamps (32,132,232,332,430) at one end of each leg (30,440) may be extended and retracted relative to the base unit (20,420) by movement of the leg (30,440) relative to the housing (426,428).

19. Apparatus (10,510) as claimed in Claim 18, wherein the apparatus (10,510) comprises four legs (30,440) that are arranged parallel to one another.

20. Apparatus (10,510) as claimed in any one of Claims 12 to 19, wherein the operation of the clamps (32,132,232,332,430) is controllable by a construction worker accommodated by the base unit (20,420).

21. Apparatus (10,510) as claimed in any one of Claims 12 to 20, wherein movement of the clamps (32,132,232,332,430) relative to the base unit (20,420) is controllable by a construction worker accommodated by the base unit (20,420).

22. Apparatus (10,510) as claimed in Claim 20 or Claim 21, wherein the base unit (20,420) includes a control panel that enables a construction worker to control said operation and/or movement of the clamps (32,132,232,332,430).

23. Apparatus (10,510) as claimed in Claim 22, wherein the control panel includes, or is in communication with, suitable control device.

24. Apparatus (10,510) as claimed in Claim 23, wherein the control device is a microprocessor.

25. Apparatus (10,510) as claimed in any one of Claims 22 to 24, wherein the control panel is only functional when the boom (50,550) and work platform (60,560) are in a configuration that is suitable for transportation of the apparatus (10,510).

26. Apparatus (10,510) as claimed in Claim 25, wherein the control panel includes a selector switch that must be in an appropriate state for the control panel to function.

27. Apparatus (10,510) as claimed in any preceding claim, wherein each clamp (32,132,232,332,430) comprises first and second clamp members (38,138,238,338,435,436) that are movable relative to one another so as to captivate a beam (11,12) or part of a beam between the clamp members (38,138,238,338,435,436) on actuation of the clamp (32,132,232,332,430).

28. Apparatus (10,510) as claimed in Claim 27, wherein each clamp (32,132,232,332,430) is adapted such that the beam (11,12) or part of a beam is captivated between the location surface and the clamp members (38,138,238,338,435,436) on actuation of the clamp (32,132,232,332,430).

29. Apparatus (10,510) as claimed in Claim 28, wherein each clamp (32,132,232,332,430) is adapted for engagement with a flange of a beam (11,12) comprising a pair of flanges joined by a connecting web.

30. Apparatus (10,510) as claimed in Claim 29, wherein the location surface is adapted to lie against an outer face of the flange, and the clamp arms are adapted to engage an inner face of the flange on either side of the connecting web, such that the flange is captivated, in use, between the location surface and the first and second clamp members (38,138,238,338,435,436).

31. Apparatus (10,510) as claimed in Claim 30, wherein each clamp (32,132,232,332,430) is fixed to one end of a leg (30,440).

32. Apparatus (10,510) as claimed in Claim 31, wherein the first clamp member (435) is mounted to a carriage (434), which is itself mounted within the leg (30,440) and includes a mechanism for moving the carriage (434) relative to the leg (30,440), such that the first clamp member (435) may be moved along a linear path relative to the leg (30,440).

33. Apparatus (10,510) as claimed in Claim 32, wherein the second clamp member (436) has a fixed linear position relative to the leg (30,440), and the first and second clamp members (435,436) are brought into engagement with the flange by extension of the leg (30,440) until the second clamp member (436) engages the flange, and retraction of the carriage (434) until the first clamp member (435) engages the flange.

34. A method of construction comprising the steps of
(a) providing apparatus (10,510) as claimed in any preceding claim;
(b) raising the apparatus (10,510) relative to a structure;
(c) positioning the apparatus (10,510) such that the location surface of each clamp (32,132,232,332,430) lies alongside an upper surface of a beam (11,12) of the structure;
(d) actuating the clamps (32,132,232,332,430) so as to releasably fix the apparatus (10,510) to the structure in an elevated location relative to the ground; and
(e) moving a construction worker and/or construction material relative to the structure.

35. A method as claimed in Claim 34, wherein a construction worker is accommodated by the base unit (20,420) whilst the apparatus (10,510) is raised relative to the structure.

36. A method as claimed in Claim 35, wherein the construction worker accommodated by the base unit (20,420) is attached to the safety rail by a safety harness during the raising of the apparatus (10,510) relative to the structure.

37. A method as claimed in any one of Claims 34 to 36, wherein the apparatus (10,510) is raised relative to the structure by a crane.

38. A method as claimed in Claim 37, wherein the apparatus (10,510) is fixed to the structure in an elevated location relative to the ground while the crane remains engaged with the apparatus (10,510).

39. A method as claimed in any one of Claims 34 to 38, wherein the apparatus (10,510) includes a mechanism for moving a construction worker relative to the base unit (20,420), said mechanism comprising a work platform (60,560) that is adapted for accommodating a construction worker and a mechanism for moving the work platform (60,560) relative to the base unit (20,420), and the work platform (60,560) and the construction worker are elevated to a fixing site of greater elevation relative to the ground at which the construction worker fixes construction material to the structure.

40. A method as claimed in Claim 39, wherein construction material is transported to the construction worker at the fixing site by a crane.

41. A method as claimed in any one of Claims 34 to 38, wherein the apparatus (10,510) comprises a mechanism for moving construction material relative to the base unit (20,420), and the construction material is elevated to a fixing site of greater elevation relative to the ground at which a construction worker fixes the construction material to the structure.

42. A method as claimed in Claim 41, wherein the construction material is moved using a winch.

## Patentansprüche

1. Vorrichtung (10, 510) zur Verwendung im Bauwesen, wobei die Vorrichtung (10, 510) eine Basiseinheit (20, 420), die zum Aufnehmen eines Bauarbeiters ausgeführt ist und auf einer Konstruktion in einer relativ zum Boden erhöhten Position positionierbar ist, und einen Mechanismus zum Bewegen eines Bauarbeiters und/oder von Baumaterial relativ zu der Konstruktion aufweist, **dadurch gekennzeichnet, dass** die Basiseinheit (20, 420) eine Mehrzahl von Klemmen (32, 132, 232, 332, 430) aufweist, die betätigt werden können, um die Basiseinheit (20, 420) lösbar in der erhöhten Position an der Konstruktion zu befestigen, wobei jede Klemme (32, 132, 232, 332, 430) eine Auflagefläche beinhaltet, die ausgeführt ist, um vor Betätigung der Klemme (32, 132, 232, 332, 430) neben einer oberen Oberfläche eines Trägers (11, 12) der Konstruktion zu liegen.

2. Vorrichtung (10, 510) nach Anspruch 1, bei der die Basiseinheit (20, 420) zum Aufnehmen eines Bauarbeiters während des Anhebens der Vorrichtung (10, 510) relativ zu der Konstruktion ausgeführt ist.

3. Vorrichtung (10, 510) nach Anspruch 2, bei der die Basiseinheit (20, 240) anerkannte Sicherheitsstandards in Bezug auf Transportbühnen für Bauarbeiter erfüllt.

4. Vorrichtung (10, 510) nach einem der Ansprüche 1 bis 3, bei der die Basiseinheit (20, 420) einen Boden und eine Absperrung am Umfang aufweist.

5. Vorrichtung (10, 510) nach einem der vorhergehenden Ansprüche, wobei die Vorrichtung (10, 510) zur Kopplung an einen Kran ausgeführt ist.

6. Vorrichtung (10, 510) nach einem der vorhergehenden Ansprüche, wobei die Vorrichtung (10, 510) einen Mechanismus zum Bewegen eines Bauarbeiters relativ zur Basiseinheit (20, 420) aufweist.

7. Vorrichtung (10, 510) nach Anspruch 6, bei der der Mechanismus zum Bewegen eines Bauarbeiters relativ zur Basiseinheit (20, 420) eine Arbeitsbühne (60, 560), die zum Aufnehmen eines Bauarbeiters ausgeführt ist, und einen Mechanismus zum Bewegen der Arbeitsbühne (60, 560) relativ zu der Basiseinheit (20, 420) beinhaltet.

8. Vorrichtung (10, 510) nach Anspruch 7, bei der die Position der Arbeitsbühne (60, 560) relativ zu der Basiseinheit (20, 420) von dem von der Arbeitsbühne (60, 560) aufgenommenen Bauarbeiter gesteuert werden kann.

9. Vorrichtung (10, 510) nach Anspruch 8, bei der an der Arbeitsbühne (60, 560) ein Bedienteil angebracht ist, um es dem Bauarbeiter zu ermöglichen, die Arbeitsbühne (60, 560) relativ zu der Basiseinheit (20, 420) zu bewegen.

10. Vorrichtung (10, 510) nach Anspruch 9, bei der das Bedienteil an der Basiseinheit (20, 420) einen Wählschalter beinhaltet, der in einem zutreffenden Zustand sein muss, damit das Bedienteil an der Arbeitsbühne (60, 560) funktionieren kann.

11. Vorrichtung (10, 510) nach einem der vorhergehenden Ansprüche, bei der eine oder mehrere der Klemmen (32, 132, 232, 332, 430) relativ zu der Basiseinheit (20, 420) beweglich montiert ist/sind.

12. Vorrichtung (10, 510) nach Anspruch 11, bei der die Klemmen (32, 132, 232, 332, 430) ausgeführt sind, um einen oder mehrere Träger (11, 12) oder dergleichen der Konstruktion in Eingriff zu nehmen.

13. Vorrichtung (10, 510) nach Anspruch 11 oder Anspruch 12, bei der jede Klemme (32, 132, 232, 332, 430) an einem Bein (30, 440) angebracht ist, das sich von der Basiseinheit (20, 420) erstreckt.

14. Vorrichtung (10, 510) nach Anspruch 13, bei der jede Klemme (32, 132, 232, 332, 430) relativ zu der Basiseinheit (20, 420) beweglich ist und eine solche Bewegung durch die Bewegung des Beines (30, 440) relativ zu der Basiseinheit (20, 420) bewirkt wird.

15. Vorrichtung (10, 510) nach Anspruch 14, bei der jedes Bein (30, 440) relativ zu der Basiseinheit (20, 420) beweglich ist und/oder so längenverstellbar ist, dass die Länge des Teils des Beins (30, 440), der über die Basiseinheit (20, 420) hinausragt, geändert werden kann.

16. Vorrichtung (10, 510) nach Anspruch 15, bei der jedes Bein (30, 440) drehbar an der Basiseinheit (20, 420) angebracht ist.

17. Vorrichtung (10, 510) nach Anspruch 16, bei der jedes Bein (30, 440) teleskopisch ausfahrbar und einziehbar ist.

18. Vorrichtung (10, 510) nach Anspruch 17, bei der jedes Bein (30, 440) gleitfähig in einem Gehäuse (426, 428) angebracht ist, das relativ zu der Basiseinheit (20, 420) fixiert ist, so dass Klemmen (32, 132, 232, 332, 430) an einem Ende jedes Beins (30, 440) durch die Bewegung des Beins (30, 440) relativ zu dem Gehäuse (426, 428) relativ zu der Basiseinheit (20, 420) ausgefahren und eingezogen werden können.

19. Vorrichtung (10, 510) nach Anspruch 18, wobei die Vorrichtung (10, 510) vier Beine (30, 440) aufweist, die parallel zueinander angeordnet sind.

20. Vorrichtung (10, 510) nach einem der Ansprüche 12 bis 19, bei der die Bedienung der Klemmen (32, 132, 232, 332, 430) von einem von der Basiseinheit (20, 420) aufgenommenen Bauarbeiter gesteuert werden kann.

21. Vorrichtung (10, 510) nach einem der Ansprüche 12 bis 20, bei der die Bewegung der Klemmen (32, 132, 232, 332, 430) relativ zu der Basiseinheit (20, 420) von einem von der Basiseinheit (20, 420) aufgenommenen Bauarbeiter gesteuert werden kann.

22. Vorrichtung (10, 510) nach Anspruch 20 oder Anspruch 21, bei der die Basiseinheit (20, 420) ein Bedienteil beinhaltet, das es einem Bauarbeiter ermöglicht, die Bedienung und/oder die Bewegung der Klemmen (32, 132, 232, 332, 430) zu steuern.

23. Vorrichtung (10, 510) nach Anspruch 22, bei der das Bedienteil ein geeignetes Steuergerät beinhaltet oder mit einem geeigneten Steuergerät in Verbindung ist.

24. Vorrichtung (10, 510) nach Anspruch 23, bei der das Steuergerät ein Mikroprozessor ist.

25. Vorrichtung (10, 510) nach einem der Ansprüche 22 bis 24, bei der das Bedienteil nur funktionsfähig ist, wenn der Ausleger (50, 550) und die Arbeitsbühne (60, 560) in einer Konfiguration sind, die für die Beförderung der Vorrichtung (10, 510) geeignet ist.

26. Vorrichtung (10, 510) nach Anspruch 25, bei der das Bedienteil einen Wählschalter beinhaltet, der in einem zutreffenden Zustand sein muss, damit das Bedienteil funktionieren kann.

27. Vorrichtung (10, 510) nach einem der vorhergehenden Ansprüche, bei der jede Klemme (32, 132, 232, 332, 430) ein erstes und ein zweites Klemmenelement (38, 138, 238, 338, 435, 436) aufweist, die relativ zueinander beweglich sind, um bei Betätigung der Klemme (32, 132, 232, 332, 430) einen Träger (11, 12) oder Teil eines Trägers zwischen den Klemmenelementen (38, 138, 238, 338, 435, 436) festzuhalten.

28. Vorrichtung (10, 510) nach Anspruch 27, bei der jede Klemme (32, 132, 232, 332, 430) so ausgeführt ist, dass der Träger (11, 12) oder Teil eines Trägers bei Betätigung der Klemme (32, 132, 232, 332, 430) zwischen der Auflagefläche und den Klemmenelementen (38, 138, 238, 338, 435, 436) festgehalten wird.

29. Vorrichtung (10, 510) nach Anspruch 28, bei der jede Klemme (32, 132, 232, 332, 430) für den Eingriff mit einem Flansch eines Trägers (11, 12) ausgeführt ist, der ein Paar Flansche aufweist, die durch einen Verbindungssteg verbunden sind.

30. Vorrichtung (10, 510) nach Anspruch 29, bei der die Auflagefläche so ausgeführt ist, dass sie an einer Außenfläche des Flansches anliegt, und die Klemmenarme so ausgeführt sind, dass sie eine Innenfläche des Flansches auf beiden Seiten des Verbindungsstegs in Eingriff nehmen, so dass im Gebrauch der Flansch zwischen der Auflagefläche und dem ersten und dem zweiten Klemmenelement (38, 138, 238, 338, 435, 436) festgehalten wird.

31. Vorrichtung (10, 510) nach Anspruch 30, bei der jede Klemme (32, 132, 232, 332, 430) an einem Ende eines Beines (30, 440) befestigt ist.

32. Vorrichtung (10, 510) nach Anspruch 31, bei der das erste Klemmenelement (435) auf einem Schlitten (434) angebracht ist, der selbst in dem Bein (30, 440) angebracht ist, und einen Mechanismus zum Bewegen des Schlittens (434) relativ zu dem Bein (30, 440) beinhaltet, so dass das erste Klemmenelement (435) entlang einem linearen Weg relativ zu dem Bein (30, 440) bewegt werden kann.

33. Vorrichtung (10, 510) nach Anspruch 32, bei der das zweite Klemmenelement (436) eine feste lineare Position relativ zu dem Bein (30, 440) hat und das erste und das zweite Klemmenelement (435, 436) **dadurch** mit dem Flansch in Eingriff gebracht werden, dass das Bein (30, 440) ausgefahren wird, bis das zweite Klemmenelement (436) den Flansch in Eingriff nimmt, und der Schlitten (434) zurückgezogen wird, bis das erste Klemmenelement (435) den Flansch in Eingriff nimmt.

34. Bauverfahren, das die folgenden Schritte umfasst:
a) Bereitstellen einer Vorrichtung (10, 510) nach einem der vorhergehenden Ansprüche;
b) Heben der Vorrichtung (10, 510) relativ zu einer Konstruktion;
c) Positionieren der Vorrichtung (10, 510), so dass die Auflagefläche jeder Klemme (32, 132, 232, 332, 430) neben einer oberen Oberfläche eines Trägers (11, 12) der Konstruktion liegt;
d) Betätigen der Klemmen (32, 132, 232, 332, 430), um die Vorrichtung (10, 510) in einer erhöhten Lage relativ zum Boden lösbar an der Konstruktion zu befestigen; und
e) Bewegen eines Bauarbeiters und/oder von Baumaterial relativ zu der Konstruktion.

35. Verfahren nach Anspruch 34, bei dem ein Bauarbeiter von der Basiseinheit (20, 420) aufgenommen wird, während die Vorrichtung (10, 510) relativ zu der Konstruktion angehoben wird.

36. Verfahren nach Anspruch 35, bei dem der von der Basiseinheit (20, 420) aufgenommene Bauarbeiter während des Hebens der Vorrichtung (10, 510) relativ zu der Konstruktion mit einem Sicherheitsgeschirr an dem Schutzgeländer angebracht ist.

37. Verfahren nach einem der Ansprüche 34 bis 36, bei dem die Vorrichtung (10, 510) von einem Kran relativ zu der Konstruktion angehoben wird.

38. Verfahren nach Anspruch 37, bei dem die Vorrichtung (10, 510) in einer erhöhten Lage relativ zum Boden an der Konstruktion befestigt wird, während der Kran mit der Vorrichtung (10, 510) in Eingriff bleibt.

39. Verfahren nach einem der Ansprüche 34 bis 38, bei dem die Vorrichtung (10, 510) einen Mechanismus zum Bewegen eines Bauarbeiters relativ zu der Basiseinheit (20, 420) beinhaltet, wobei der genannte Mechanismus eine Arbeitsbühne (60, 560), die zur Aufnahme eines Bauarbeiters ausgeführt ist, und einen Mechanismus zum Bewegen der Arbeitsbühne (60, 560) relativ zur Basiseinheit (20, 420) aufweist und die Arbeitsbühne (60, 560) und der Bauarbeiter auf einen Befestigungsort in einer größeren Höhe relativ zum Boden angehoben werden, an dem der Bauarbeiter Baumaterial an der Konstruktion befestigt.

40. Verfahren nach Anspruch 39, bei dem das Baumaterial von einem Kran zu dem Bauarbeiter an dem Befestigungsort befördert wird.

41. Verfahren nach einem der Ansprüche 34 bis 38, bei dem die Vorrichtung (10, 510) einen Mechanismus zum Bewegen von Baumaterial relativ zu der Basiseinheit (20, 420) aufweist und das Baumaterial auf einen Befestigungsort in einer größeren Höhe relativ zum Boden gehoben wird, an welchem ein Bauarbeiter das Baumaterial an der Konstruktion befestigt.

42. Verfahren nach Anspruch 41, bei dem das Baumaterial mit einer Winde bewegt wird.

## Revendications

1. Appareil (10, 510) pour utilisation dans la construction, lequel appareil (10, 510) comprend une unité de base (20, 420) adaptée pour accueillir un ouvrier du bâtiment et pouvant se situer sur une structure dans une position surélevée par rapport au sol, et un mécanisme pour déplacer un ouvrier du bâtiment et/ou matériau de construction par rapport à la structure, **caractérisé en ce que** l'unité de base (20, 420) comprend une pluralité de pinces (32, 132, 232, 332, 430) actionnables pour fixer de manière amovible l'unité de base (20, 420) à la structure dans la position surélevée, où chaque pince (32, 132, 232, 332, 430) inclut une surface de localisation qui est adaptée pour s'étendre le long d'une surface supérieure d'une poutre (11, 12) de la structure avant l'actionnement de la pince (32, 132, 232, 332, 430).

2. Appareil (10, 510) tel que revendiqué à la Revendication 1, où l'unité de base (20, 420) est adaptée pour accueillir un ouvrier du bâtiment pendant que l'appareil (10, 510) est soulevé par rapport à la structure.

3. Appareil (10, 510) tel que revendiqué à la Revendication 2, où l'unité de base (20, 420) satisfait aux normes de sécurité reconnues concernant les plateformes de transport pour les ouvriers du bâtiment.

4. Appareil (10, 510) tel que revendiqué dans une quelconque des Revendications 1 à 3, où l'unité de base (20, 420) comprend un plancher et une barrière périphérique.

5. Appareil (10, 510) tel que revendiqué dans une quelconque revendication précédente, où l'appareil (10, 510) est adapté pour être couplé à une grue.

6. Appareil (10, 510) tel que revendiqué dans une quelconque revendication précédente, où l'appareil (10, 510) comprend un mécanisme pour déplacer un ouvrier du bâtiment par rapport à l'unité de base (20, 420).

7. Appareil (10, 510) tel que revendiqué à la Revendication 6, où le mécanisme pour déplacer un ouvrier du bâtiment par rapport à l'unité de base (20, 420) inclut une plateforme de travail (60, 560) qui est adaptée pour accueillir un ouvrier du bâtiment, et un mécanisme pour déplacer la plateforme de travail (60, 560) par rapport à l'unité de base (20, 420).

8. Appareil (10, 510) tel que revendiqué à la Revendication 7, où la position de la plateforme de travail (60, 560) par rapport à l'unité de base (20, 420) est contrôlable par l'ouvrier du bâtiment accueilli par la plateforme de travail (60, 560).

9. Appareil (10, 510) tel que revendiqué à la Revendication 8, où un tableau de commande est monté sur la plateforme de travail (60, 560) pour permettre à l'ouvrier du bâtiment de déplacer la plateforme de travail (60, 560) par rapport à l'unité de base (20, 420).

10. Appareil (10, 510) tel que revendiqué à la Revendication 9, où le tableau de commande sur l'unité de base (20, 420) inclut un commutateur qui doit être dans un état adéquat pour que le tableau de commande sur la plateforme de travail (60, 560) fonctionne.

11. Appareil (10, 510) tel que revendiqué dans une quelconque revendication précédente, où une ou plusieurs des pinces (32, 132, 232, 332, 430) sont montées de manière amovible par rapport à l'unité de base (20, 420).

12. Appareil (10, 510) tel que revendiqué à la Revendication 11, où les pinces (32, 132, 232, 332, 430) sont adaptées pour venir en prise avec une ou plusieurs poutres (11, 12) ou similaires de la structure.

13. Appareil (10, 510) tel que revendiqué à la Revendication 11 ou Revendication 12, où chaque pince (32, 132, 232, 332, 430) est fixée à une jambe (30, 440) qui s'étend à partir de l'unité de base (20, 420).

14. Appareil (10, 510) tel que revendiqué à la Revendication 13, où chaque pince (32, 132, 232, 332, 430) est mobile par rapport à l'unité de base (20, 420), et un tel mouvement est entraîné par le mouvement de la jambe (30, 440) par rapport à l'unité de base (20, 420).

15. Appareil (10, 510) tel que revendiqué à la Revendication 14, où chaque jambe (30, 440) est mobile par rapport à l'unité de base (20, 420) et/ou ajustable en longueur de telle sorte que la longueur de la partie de la jambe (30, 440) qui dépasse l'unité de base (20, 420) est altérable.

16. Appareil (10, 510) tel que revendiqué à la Revendication 15, où chaque jambe (30, 440) est montée de manière rotative à l'unité de base (20, 420).

17. Appareil (10, 510) tel que revendiqué à la Revendication 16, où chaque jambe (30, 440) est extensible et rétractable de manière télescopique.

18. Appareil (10, 510) tel que revendiqué à la Revendication 17, où chaque jambe (30, 440) est montée par coulissement à l'intérieur d'un boîtier (426, 428) qui est fixe par rapport à l'unité de base (20, 420), de telle sorte que des pinces (32, 132, 232, 332, 430) à une extrémité de chaque jambe (30, 440) peuvent être étirées et rétractées par rapport à l'unité de base (20, 420) par le mouvement de la jambe (30, 440) par rapport au boîtier (426, 428).

19. Appareil (10, 510) tel que revendiqué à la Revendication 18, où l'appareil (10, 510) comprend quatre jambes (30, 440) qui sont disposées en parallèle les unes aux autres.

20. Appareil (10, 510) tel que revendiqué dans une quelconque des Revendications 12 à 19, où le fonctionnement des pinces (32, 132, 232, 332, 430) est contrôlable par un ouvrier du bâtiment accueilli par l'unité de base (20, 420).

21. Appareil (10, 510) tel que revendiqué dans une quelconque des Revendications 12 à 20, où le mouvement des pinces (32, 132, 232, 332, 430) par rapport à l'unité de base (20, 420) est contrôlable par un ouvrier du bâtiment accueilli par l'unité de base (20, 420).

22. Appareil (10, 510) tel que revendiqué à la Revendication 20 ou Revendication 21, où l'unité de base (20, 420) inclut un tableau de commande qui permet à un ouvrier du bâtiment de commander ledit fonctionnement et/ou mouvement des pinces (32, 132, 232, 332, 430).

23. Appareil (10, 510) tel que revendiqué à la Revendication 22, où le tableau de commande inclut, ou est en communication avec, un dispositif de commande adapté.

24. Appareil (10, 510) tel que revendiqué à la Revendication 23, où le dispositif de commande est un microprocesseur.

25. Appareil (10, 510) tel que revendiqué dans une quelconque des Revendications 22 à 24, où le tableau de commande n'est opérationnel que lorsque la flèche (50, 550) et la plateforme de travail (60, 560) sont dans une configuration qui est adaptée au transport de l'appareil (10, 510).

26. Appareil (10, 510) tel que revendiqué à la Revendication 25, où le tableau de commande inclut un commutateur qui doit être dans un état adéquat pour que le tableau de commande fonctionne.

27. Appareil (10, 510) tel que revendiqué dans une quelconque revendication précédente, où chaque pince (32, 132, 232, 332, 430) comprend des premier et second éléments de pince (38, 138, 238, 338, 435, 436) qui sont mobiles l'un par rapport à l'autre de manière à saisir une poutre (11, 12) ou une partie d'une poutre entre les éléments de pince (38, 138, 238, 338, 435, 436) dès l'actionnement de la pince (32, 132, 232, 332, 430).

28. Appareil (10, 510) tel que revendiqué à la Revendication 27, où chaque pince (32, 132, 232, 332, 430) est adaptée de telle sorte que la poutre (11, 12) ou une partie d'une poutre est saisie entre la surface de localisation et les éléments de pince (38, 138, 238, 338, 435, 436) dès l'actionnement de la pince (32, 132, 232, 332, 430).

29. Appareil (10, 510) tel que revendiqué à la Revendication 28, où chaque pince (32, 132, 232, 332, 430) est adaptée pour la mise en prise avec une bride d'une poutre (11, 12) comprenant une paire de brides jointes par une âme de liaison.

30. Appareil (10, 510) tel que revendiqué à la Revendication 29, où la surface de localisation est adaptée pour s'étendre contre une face externe de la bride, et les bras de la pince sont adaptés pour venir en prise avec une face interne de la bride sur l'un ou l'autre côté de l'âme de liaison, de telle sorte que la bride est saisie, lors de l'utilisation, entre la surface de localisation et les premier et second éléments de pince (38, 138, 238, 338, 435, 436).

31. Appareil (10, 510) tel que revendiqué à la Revendication 30, où chaque pince (32, 132, 232, 332, 430) est fixée à une extrémité d'une jambe (30, 440).

32. Appareil (10, 510) tel que revendiqué à la Revendication 31, où le premier élément de pince (435) est monté sur un chariot (434), qui est lui-même monté à l'intérieur de la jambe (30, 440) et inclut un mécanisme pour déplacer le chariot (434) par rapport à la jambe (30, 440), de telle sorte que le premier élément de pince (435) peut être déplacé le long d'un trajet linéaire par rapport à la jambe (30, 440).

33. Appareil (10, 510) tel que revendiqué à la Revendication 32, où le second élément de pince (436) a une position linéaire fixe par rapport à la jambe (30, 440), et les premier et second éléments de pince (435, 436) sont mis en prise avec la bride par extension de la jambe (30, 440) jusqu'à ce que le second élément de pince (436) vienne en prise avec la bride, et rétraction du chariot (434) jusqu'à ce que le premier élément de pince (435) vienne en prise avec la bride.

34. Procédé de construction comprenant les étapes consistant à
(a) prévoir l'appareil (10, 510) tel que revendiqué dans une quelconque revendication précédente ;
(b) soulever l'appareil (10, 510) par rapport à une structure ;
(c) positionner l'appareil (10, 510) de telle sorte que la surface de localisation de chaque pince (32, 132, 232, 332, 430) s'étend le long d'une surface supérieure d'une poutre (11, 12) de la structure ;
(d) actionner les pinces (32, 132, 232, 332, 430) afin de fixer de manière amovible l'appareil (10, 510) à la structure dans un emplacement surélevé par rapport au sol ; et
(e) déplacer un ouvrier du bâtiment et/ou matériau de construction par rapport à la structure.

35. Procédé tel que revendiqué à la Revendication 34, où un ouvrier du bâtiment est accueilli par l'unité de base (20, 420) pendant que l'appareil (10, 510) est soulevé par rapport à la structure.

36. Procédé tel que revendiqué à la Revendication 35, où l'ouvrier du bâtiment accueilli par l'unité de base (20, 420) est attaché au rail de sécurité par un harnais de sécurité pendant le levage de l'appareil (10, 510) par rapport à la structure.

37. Procédé tel que revendiqué dans une quelconque des Revendications 34 à 36, où l'appareil (10, 510) est soulevé par rapport à la structure par une grue.

38. Procédé tel que revendiqué à la Revendication 37, où l'appareil (10, 510) est fixé à la structure dans un emplacement surélevé par rapport au sol pendant que la grue reste en prise avec l'appareil (10, 510).

39. Procédé tel que revendiqué dans une quelconque des Revendications 34 à 38, où l'appareil (10, 510) inclut un mécanisme pour déplacer un ouvrier du bâtiment par rapport à l'unité de base (20, 420), ledit mécanisme comprenant une plateforme de travail (60, 560) qui est adaptée pour accueillir un ouvrier du bâtiment et un mécanisme pour déplacer la plateforme de travail (60, 560) par rapport à l'unité de base (20, 420), et la plateforme de travail (60, 560) et l'ouvrier du bâtiment sont soulevés vers un site de fixation d'une élévation supérieure par rapport au sol sur lequel l'ouvrier du bâtiment fixe un matériau de construction sur la structure.

40. Procédé tel que revendiqué à la Revendication 39, où un matériau de construction est transporté jusqu'à l'ouvrier du bâtiment sur le site de fixation par une grue.

41. Procédé tel que revendiqué dans une quelconque des Revendications 34 à 38, où l'appareil (10, 510) comprend un mécanisme pour déplacer un matériau de construction par rapport à l'unité de base (20, 420), et le matériau de construction est soulevé vers un site de fixation d'une élévation supérieure par rapport au sol sur lequel un ouvrier du bâtiment fixe le matériau de construction sur la structure.

42. Procédé tel que revendiqué à la Revendication 41, où le matériau de construction est déplacé en utilisant un treuil.
